(19) Europäisches Patentamt
European Patent Office
Office européen des brevets

(11) **EP 3 371 632 B1**

(12) **EUROPÄISCHE PATENTSCHRIFT**

(45) Veröffentlichungstag und Bekanntmachung des Hinweises auf die Patenterteilung:
**08.12.2021** **Patentblatt 2021/49**

(21) Anmeldenummer: **16805273.6**

(22) Anmeldetag: **04.10.2016**

(51) Int Cl.:
*G02B 5/32* (2006.01)   *G02B 27/00* (2006.01)
*G02B 27/42* (2006.01)   *G03H 1/22* (2006.01)
*G02B 27/01* (2006.01)   *G03H 1/02* (2006.01)

(86) Internationale Anmeldenummer:
**PCT/DE2016/200461**

(87) Internationale Veröffentlichungsnummer:
**WO 2017/076404 (11.05.2017 Gazette 2017/19)**

(54) **OPTISCHES SYSTEM**

OPTICAL SYSTEM

SYSTÈME OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2015   DE 102015221774**

(43) Veröffentlichungstag der Anmeldung:
**12.09.2018   Patentblatt 2018/37**

(73) Patentinhaber: **Agrippa Holding & Consulting GmbH
67591 Mölsheim (DE)**

(72) Erfinder: **KNUETTEL, Alexander
67591 Mölsheim (DE)**

(74) Vertreter: **Ullrich & Naumann PartG mbB
Schneidmühlstrasse 21
69115 Heidelberg (DE)**

(56) Entgegenhaltungen:
**EP-A1- 2 918 402       WO-A1-2010/057219
WO-A1-2013/079622     US-A1- 2015 116 798
US-A1- 2015 277 117**

• **JUSTO ARINES ET AL: "Pupil tracking with a Hartmann-Shack wavefront sensor", INTERNATIONAL SOCIETY FOR OPTICAL ENGINEERING, Bd. 15, Nr. 3, 1. Mai 2010 (2010-05-01), Seite 036022, XP055334717, PO Box 10 Bellingham WA 98227-0010 USA ISSN: 1083-3668, DOI: 10.1117/1.3447922**

**Beschreibung**

Die vorliegende Erfindung betrifft ein optisches System zur Erzeugung eines zwei- oder dreidimensionalen Bildes.

Die vorliegende Erfindung betrifft weiter ein Verfahren zur Erzeugung eines zwei- oder dreidimensionalen Bildes.

Obwohl die vorliegende Erfindung sowohl für zweidimensionale Bilder als auch dreidimensionale Bilder anwendbar ist, wird diese in Bezug auf dreidimensionale Bilder erläutert.

Verfahren bzw. Geräte zur Darstellung dreidimensionaler Bilder sind bspw. aus der DE 698 20 363 T2, der US 7,350,922 B2 und der US 5,917,459 bekannt geworden.

Optische Systeme mit Abbildungseinrichtungen basierend auf Hologrammen sind beispielsweise aus WO2010/057219A1 bekannt.

Um optische Informationen durch ein Auge wahrnehmen zu können, muss das Licht zunächst durch die sog. Kornea und die Augenlinse hindurch. Danach wird dieses zu einem Lichtfleck gebündelt und von den Stäbchen und Zapfen auf der Netzhaut/Retina detektiert. Der Durchmesser des Lichtbündels wird dabei durch die Irisblende beeinflusst. Um eine möglichst große Auflösung zu erhalten, muss die Irisblende möglichst groß werden. Bei größerer Irisblende steigen aber auch die Aberrationen durch Kornea und Linse; die Auflösung nimmt daher mit größerer Blende wieder ab. Bei einem Pupillendurchmesser von ca. 2 mm - dies entspricht einer üblichen Tageslichtsituation - ist die laterale Auflösung auf der Netzhaut/Retina optimal und beträgt ca. 0,25 mrad. Die Anatomie der Netzhaut/Retina erlaubt ein scharfes Sehen in einem inneren Bereich - der sog. Fovea Centralis - nahe der anatomischen optischen Achse mit einem Durchmesser von etwa 2 mm und einem Sehfeldwinkel von 6° bzw. 100 mrad. Dieser Bereich wird üblicherweise zum fokussierten Sehen, wie z.B. Lesen, genutzt. Der periphere Sehbereich beträgt etwa 120° oder 2000 mrad und erlaubt nur die Betrachtung von Umrissen. Dieser Bereich ist jedoch bei der Wahrnehmung von dreidimensionalen Bildern wichtig, ebenso wie die Wahrnehmung von schneller Bewegung.

Um dreidimensional ermüdungsfrei sehen zu können, muss a) jedes Auge über Akkommodation der Linse auf einen Objektpunkt fixieren, d.h. optisch auf diesen scharfstellen, können und b) beide Augen müssen über die Parallaxe auf einen Punkt gerichtet sein. Abstände von unendlich kommend bis zu der sog. hyperfokalen Distanz erfordern keine bzw. lediglich eine minimale Akkommodation. Erst bei noch geringeren Abständen wird Akkommodation, d.h. eine kleinere Linsenbrennweite, erforderlich. Diese hyperfokale Distanz beträgt typischerweise 4 Meter. In jungen Jahren ist eine Akkommodation eines Nutzers bis 10 cm Distanz möglich; die Akkommodationsfähigkeit nimmt jedoch mit dem Alter in der Regel ab, d.h. die Distanz nimmt dann zu.

Um einen räumlichen dreidimensionalen Eindruck zu vermitteln ist es bekannt geworden, mittels Stereoskopie Bildern einen räumlichen Eindruck von Tiefe zu geben, der physikalisch nicht vorhanden ist. Beim stereoskopischen Betrachten wird jedem Auge je nach Abstand des Objektes eine entsprechende Richtungsperspektive des Objekts "angeboten". Hierbei stimmt zwar die Parallaxe, aber die Fokussierung in der Regel nicht. Da jedoch das Bild auf einem Beleuchtungsschirm erzeugt wird, der üblicherweise einen festen Abstand vom Betrachter hat, kann die Akkommodierungsfähigkeit des Auges nicht genutzt werden, was zu Ermüdungserscheinungen führt.

Um eine realistische dreidimensionale Betrachtung zu ermöglichen, ist es somit erforderlich, ein dreidimensionales Objekt in den Raum zu projizieren und nicht nur auf eine planare, zweidimensionale Fläche wie einen Beleuchtungsschirm. Hierzu ist es bereits bekannt geworden ein Hologramm zu nutzen. Derzeit übliche Hologramme sind lediglich statisch, d.h. mit direkter holographischer Belichtung möglich. Für bewegte Bilder muss jedoch eine enorme Datenmenge in Kauf genommen werden:

a) Ein Brillenglas sei in Form eines Hologramms ausgebildet, welches eine Fläche von vereinfacht 30x30 mm$^2$ aufweist. Bei einem vollen Sehwinkel von +/- 60° wird eine komplexe Amplitudeninformation mit insgesamt 4 * 10$^9$ Samples pro Bild benötigt. Bei 8 bit Auflösung pro Pixel, 3 Farben und 100 Hz Wiederholrate ergibt sich eine Datenrate von etwa 10$^{13}$ bit/s (oder 10.000 Gb/s). Maximal derzeit mögliche Datentransferraten liegen bei 50 Gb/s, also um einen Faktor 200 geringer als die benötigte Datenrate, sodass mit heute üblichen Systemen die Darstellung von bewegten Bilder technisch nicht möglich ist.

b) Ein Projektionsglas sei in Form eines Hologramms mit einer Fläche von vereinfacht 1×1 m$^2$ ausgebildet. Bei einem vollen Sehwinkel von +/-60° wird eine komplexe Amplitudeninformation mit insgesamt 4 * 10$^{12}$ Samples pro Bild benötigt. Gegenüber der obigen Anwendung a) würde nochmals eine Faktor 1000 höhere Datenrate - also 10$^7$ Gb/s - benötigt.

Aus der US 2010/0060551 ist es bereits bekannt geworden, ein Brillenglas mit einem Hohlspiegel zu versehen, wobei der Hohlspiegel durch ein Volumen-Hologramm gebildet wird. Hat dieser Hohlspiegel die Brennweite f kann im Abstand 2f der Eingangswinkel in einen exakt gleich großen Ausgangswinkel als Sehwinkel für das Auge übersetzt werden. Befindet sich das Auge an diesem konjugierten Punkt, ist der Platzbedarf für eine Projektionseinheit für ein dreidimensionales Bild gering, weil nur der Strahlquerschnitt entsprechend gedreht werden muss. Bei lateraler Verschiebung wird der Platzbedarf entsprechend größer.

Nachteilig dabei ist jedoch, dass sequentiell ein Punktscanning über einen Ablenkspiegel durchgeführt wird. Dabei muss die Pupille exakt im konjugierten Punkt des Scanning-Spiegels sitzen, sonst erreicht das Licht die Pupille nicht. Wenn sich der Augenabstand zur nächsten Position ändert, muss die Position des Scanning-Spiegels sich ebenfalls ändern. Insoweit ist die Flexibilität des in der US 2010/0060551 gezeigten Systems erheblich eingeschränkt. Darüber hinaus ist auch keine dreidimensionale bewegte Darstellung eines Bildes möglich, da das Scanning bzw. die sequentielle Fokussierung zu langsam ist.

In der WO 2014/115095 ist ein holografischer, transflektiver Bildschirm gezeigt, der Licht von einem Projektionssystem reflektiert. Der Bildschirm umfasst zumindest ein Volumenhologramm sowie ein erstes und ein zweites Schutzelement, die so ausgebildet sind, dass sie in Kontakt mit dem Volumenhologramm stehen und das Volumenhologramm zwischen diesen angeordnet ist. Der transflektive holografische Bildschirm wird beispielsweise als sog. Head-Up-Display HUD ausgebildet. Das Volumenhologramm bzw. die Volumenhologramme übernehmen hierbei die Funktion einer Mikrolinsenanordnung. Insbesondere in Fig. 4 der WO 2014/115095 ist gezeigt, dass jede dieser Mikrolinsen der Mikrolinsenanordnung sequentiell über einen Drehspiegel 107 - Raster-Scanning - angesteuert wird. Von den einzelnen holografischen Elementen, den Mikrolinsen, wird das Licht diffus in Richtung zum Auge eines jeweiligen Betrachters reflektiert.

Nachteilig hierbei ist, dass ein Nutzer eine bifokale Kontaktlinse - special contact lens 501 - benötigt, wenn er den Inhalt auf dem Bildschirm betrachten möchte und dieser in einen Brillenglas gefasst ist. Darüber hinaus sind nur zweidimensionale Flachbildinformationen darstellbar, eine dreidimensionale Darstellung ist damit nicht möglich, da die Brennweite der holografischen Elemente zu klein ist. Auch ist die Vorrichtung insgesamt ineffektiv, da sich die Pupille nur in einem kleinen Raumwinkel des abgestrahlten Lichts befindet und somit ein hoher Anteil an Licht ungenutzt bleibt.

Eine Aufgabe der vorliegenden Erfindung ist es daher, eine Vorrichtung und ein Verfahren zur Erzeugung eines zwei- oder dreidimensionalen Bildes zur Verfügung zu stellen, welche Informationen zwei- oder dreidimensional räumlich darstellbar macht. Darüber hinaus soll die Vorrichtung bzw. das Verfahren flexibel einsetzbar bzw. verwendbar sein und ebenso eine echte realistische dreidimensionale Darstellung von bewegten Bildern ermöglichen. Weiterhin soll das Verfahren bzw. die Vorrichtung hinsichtlich ihres Bauraums möglichst kompakt ausgestaltbar sein.

Die vorliegende Erfindung löst die Aufgaben mit einem optischen System zur Erzeugung eines zwei- oder dreidimensionalen Bildes, umfassend

eine Projektionseinrichtung zur optischen Übertragung von Bildinformation zu zumindest einem Nutzer,

eine Augendetektionseinrichtung, und
eine Abbildungseinrichtung zur Abbildung der Bildinformationen der Projektionseinrichtung für die Wahrnehmung durch den zumindest einen Nutzer,

wobei
die Abbildungseinrichtung
zumindest ein optisches Hologramm-Set umfasst, wobei

- zumindest eines der optischen Hologramm-Sets winkelverstärkend ausgebildet ist und das zumindest eine winkelverstärkend ausgebildete Hologramm-Set zumindest zwei Hologramme umfasst und wobei die zumindest zwei Hologramme zur Bereitstellung der Winkelverstärkung zusammenwirken, und wobei
- zumindest eines der optischen Hologramm-Sets zumindest teilweise transmittierend und/oder zumindest teilweise reflektierend, vorzugsweise zumindest zu 90% reflektierend ausgebildet ist,

wobei
mittels der Projektionseinrichtung

- zumindest ein virtueller optischer Punkt erzeugt wird oder
- eine Mehrzahl von virtuellen optischen Punkten derart erzeugt werden, sodass diese zumindest eine optische Wellenfront bilden,

wobei ein virtueller optischer Punkt jeweils durch Überlagerung zumindest zweier kohärenter Lichtwellen im Bereich des zumindest einen winkelverstärkend ausgebildeten optischen Hologramm-Sets erzeugbar ist und wobei
mittels des zumindest einen optischen Hologramm-Sets der zumindest eine virtuelle Punkt oder die zumindest eine optische Wellenfront auf die jeweiligen Augen des zumindest einen Nutzers abbildbar ist und wobei

mittels der Augendetektionseinrichtung die jeweilige Bewegung der Augen des zumindest einen Nutzers detektierbar ist und die Augendetektionseinrichtung mit der Projektionseinrichtung dermaßen zusammenwirkt, sodass die Menge der Bildinformationen entsprechend der jeweiligen Augenrichtung und/oder Augenposition in verschiedenen Wahrnehmbereichen des jeweiligen Auges angepasst wird.

Die vorliegende Erfindung löst die Aufgaben ebenfalls mit einem Verfahren zur Erzeugung eines zwei- oder dreidimensionalen Bildes, wobei

- zumindest eines der optischen Hologramm-Sets winkelverstärkend ausgebildet wird und das zumindest eine winkelverstärkend ausgebildete Hologramm-Set zumindest zwei Hologramme umfasst, wobei die zumindest zwei Hologramme zur Bereitstellung der Winkelverstärkung zusammenwirken, und wobei,

- zumindest eines der optischen Hologramm-Sets zumindest teilweise transmittierend und/oder zumindest teilweise reflektierend, vorzugsweise zumindest zu 90% reflektierend ausgebildet wird und

wobei

- zumindest ein virtueller optischer Punkt oder
- eine Mehrzahl von virtuellen Punkten derart erzeugt werden, sodass diese zumindest eine Wellenfront bilden,

durch Überlagerung zumindest zweier kohärenter Lichtwellen im Bereich des winkelverstärkend ausgebildeten optischen Hologramm-Sets erzeugt werden, wobei mittels des zumindest einen optischen Hologramm-Sets der zumindest eine virtuelle Punkt oder die zumindest eine optische Wellenfront auf die jeweiligen Augen von zumindest einem Nutzer abgebildet werden und wobei die jeweilige Bewegung der Augen des zumindest einen Nutzers detektiert wird und die Menge der Bildinformationen entsprechend der jeweiligen Augenrichtung und/oder Augenposition in verschiedenen Wahrnehmbereichen des jeweiligen Auges angepasst wird.

Einer der damit erzielten Vorteile ist, dass die Datenrate, mit der Informationen zur dreidimensionalen Darstellung für einen Nutzer auf die Abbildungseinrichtung projiziert werden müssen, wesentlich gesenkt werden kann: Mittels der Augendetektionseinrichtung ist es möglich, die genaue Richtung und Position des Auges zu detektieren und entsprechend die Bildauflösung so anzupassen, so dass diese beispielsweise an den Rändern des Wahrnehmbereichs niedriger ist als in der Mitte. Ebenso ist es damit möglich, die Vorrichtung entsprechend kompakter auszubilden, so dass diese beispielsweise in einfacher Weise in ein Brillengestell für einen Nutzer integriert werden kann. Besonders mittels der winkelverstärkend ausgebildeten Hologramme ist eine sehr kompakte Bauform möglich, da damit eine - verglichen mit bereits bekannten Projektionseinrichtungen - kleine bzw. kleinere Apertur für diese möglich ist.

Ein weiterer Vorteil ist, dass damit eine echte dreidimensionale Darstellung ermöglicht wird und dies nicht nur von statischen, sondern auch - insbesondere aufgrund der hierfür gegenüber dem Stand der Technik niedrigeren erforderlichen Datenraten - bei bewegten Bildern wie beispielsweise Filmen oder dergleichen.

Neben der Flexibilität hinsichtlich der Implementierbarkeit aufgrund einer möglichen kompakten Bauform ist es mit einem einzigen optischen System ebenso möglich, beispielsweise mittels einer größeren Abbildungseinrichtung, ein insbesondere dreidimensionales bewegtes Bild für mehrere Nutzer in optimaler Weise zur Verfügung zu stellen. Hierzu werden die Augenbewegungen jedes einzelnen Nutzers mittels der Augendetektionseinrichtung überwacht und die Projektionseinrichtung projiziert dann die Bildinformation entsprechend auf die Abbildungseinrichtung, so dass diese selektiv für jeden Nutzers ein entsprechendes dreidimensionales Bild zur Wahrnehmung durch den jeweiligen Nutzer erzeugen kann.

Unter dem Begriff "Hologramm-Set" sind insbesondere in der Beschreibung, vorzugsweise den Ansprüchen, ein oder mehrere Hologramme zu verstehen, die vorzugsweise neben- und/oder zumindest in- oder übereinander im Sinne eine Überlagerung angeordnet sind.

Ein Hologramm kann insbesondere in der Beschreibung, vorzugsweise den Ansprüchen, als ein Volumen-Hologramm ausgebildet sein.

Unter dem Begriff "winkelverstärkend" in Bezug auf ein Hologramm-Set ist insbesondere in der Beschreibung, vorzugsweise den Ansprüchen, ein Hologramm-Set zu verstehen, welches zumindest zwei Hologramme umfasst, welche bei zumindest zwei einfallenden Lichtstrahlen auf das Hologramm-Set mit bestimmten Einstrahlwinkeln jeweils einen Ausstrahlwinkel bereitstellen, wobei die Differenz der Ausstrahlwinkel größer ist als die Differenz der Einstrahlwinkel, vorzugsweise unterscheiden sich die Differenzen um zumindest den Faktor 2, vorzugsweise um zumindest den Faktor 5, insbesondere um den Faktor 10. Damit kann mit einem kleinen Einstrahlwinkelspektrum ein großes Ausstrahlwinkelspektrum zur Verfügung gestellt werden.

Unter dem Begriff "winkelverstärkungsneutral" in Bezug auf ein Hologramm-Set ist insbesondere in der Beschreibung, vorzugsweise den Ansprüchen, ein Hologramm-Set zu verstehen, welches nicht winkelverstärkend wirkt oder arbeitet: Zwei auf das Hologramm-Set einfallende Lichtstrahlen mit bestimmten Einstrahlwinkeln und entsprechenden Ausstrahlwinkeln werden durch das Hologramm-Set so bereitgestellt, dass die Differenz der Ausstrahlwinkel im Wesentlichen der Differenz der Einstrahlwinkel entspricht.

Unter dem Begriff "dick" in Bezug auf ein Hologramm ist insbesondere in der Beschreibung, vorzugsweise den Ansprüchen, ein Hologramm zu verstehen, welches in Geradeaus-Blickrichtung eines Nutzers eine Erstreckung, also Dicke, zwischen ca. 100 $\mu$m und ca. 3 mm, insbesondere zwischen 1 mm und 2 mm, aufweist.

Unter dem Begriff "dünn" in Bezug auf ein Hologramm ist insbesondere in der Beschreibung, vorzugsweise den Ansprüchen, ein Hologramm zu verstehen, welches in Geradeaus-Blickrichtung eines Nutzers eine Dicke von wenigen 10 $\mu$m bis 50 $\mu$m, vorzugsweise zwischen 20 $\mu$m und 30 $\mu$m, zu verstehen. Insbesondere

können zwei "dünne" Hologramm-Sets in Summe die Dicke eines "dicken" Hologramm-Sets aufweisen.

Unter dem Begriff "transmittierend" bzw. "reflektierend" in Bezug auf ein Hologramm-Set ist insbesondere in der Beschreibung, vorzugsweise den Ansprüchen, zumindest ein Hologramm eines Hologramm-Sets zu verstehen, welches im Wesentlichen transmittierend bzw. im Wesentlichen reflektierend arbeitet. Im Wesentlichen transmittierend bedeutet, dass zumindest ein Teil, vorzugsweise mindestens 50%, insbesondere mindestens 80%, besonders vorzugsweise zumindest 90% des auf das Hologramm-Set eingestrahlten Lichts durch das Hologramm des Hologramm-Sets transmittiert. Im Wesentlichen reflektierend bedeutet hier, dass zumindest ein Teil, vorzugsweise mindestens 50%, insbesondere mindestens 80%, besonders vorzugsweise zumindest 90% des auf das Hologramm des Hologramm-Sets eingestrahlten Lichts reflektiert wird.

Unter dem Begriff "Wahrnehmbereiche" in Bezug auf ein Auge sind insbesondere in der Beschreibung, vorzugsweise den Ansprüchen verschiedene (Raum)Winkelbereiche zu verstehen, in denen das Auge in unterschiedlicher Auflösung einen Gegenstand oder dergleichen wahrnimmt. Beispielsweise wird entlang der Blickrichtung in einem engen Raumwinkelbereich mit höchster Auflösung wahrgenommen, welcher im Auge auf die fovea centralis abgebildet wird.

Weitere Merkmale, Vorteile und bevorzugte Ausführungsformen der Erfindung sind in den folgenden Unteransprüchen beschrieben oder werden durch diese offenbar.

Vorzugsweise ist die Projektionseinrichtung mit der Abbildungseinrichtung mittels zumindest eines optischen Wellenleiters verbunden. Dies ermöglicht eine konzeptionell besonders einfache Übertragung der Bildinformationen von der Projektionseinrichtung zu der Abbildungseinrichtung. Unter optischem Wellenleiter ist hier insbesondere auch ein "optical waveguide" zu verstehen.

Zweckmäßigerweise sind die Projektionseinrichtung und die Augendetektionseinrichtung als eine Projektions-/Detektionseinheit ausgebildet, vorzugsweise wobei die Projektions-/Detektionseinheit zumindest einen Strahlteiler umfasst zur Aufteilung von Projektionsstrahlengang und Detektionsstrahlengang der Projektions-/Detektionseinheit. Damit ist es möglich, Projektionseinrichtung und Detektionseinrichtung beispielsweise in einem gemeinsamen Gehäuse platzsparend anzuordnen. Besonders zweckmäßig ist es dabei, wenn Projektionsstrahlengang und Detektionsstrahlengang außerhalb der Projektions-/Detektionseinheit den gleichen Verlauf aufweisen. Diese können dann auf besonders einfache Weise innerhalb der Projektions-/Detektionseinheit mittels eines Strahlteilers aufgeteilt werden.

Vorteilhafterweise ist eine Apertur der Projektionseinrichtung und/oder Augendetektionseinrichtung kleiner als 10 mm, insbesondere kleiner als 5 mm, vorzugsweise kleiner als 3 mm ausgebildet. Damit lässt sich bei ausreichender Öffnung für die Projektion der Projektions-/Detektionseinheit eine kompakte Ausbildung der Projektions-/Detektionseinheit erreichen, so dass diese beispielsweise in oder an einem Brillengestell angeordnet werden kann.

Zweckmäßigerweise umfasst die Projektionseinrichtung zumindest einen Amplituden/Phasen-Modulator oder einen oder mehrere Phasenmodulatoren, wobei bei einer Mehrzahl von Modulatoren diese gemeinsam in einem Modul angeordnet sind. Mittels eines beispielsweise pixelbasierten Amplituden-/Phasen-Modulators, wobei insbesondere Pixelgrößen im Mikrometerbereich vorteilhaft sind, kann auf zuverlässige Weise die jeweilige Bildinformation zur Abbildungseinrichtung entsprechend der Ausrichtung der Augen übertragen werden. Daneben ist alternativ auch ein reiner Phasenmodulator oder zwei oder mehrere Phasenmodulatoren möglich, wobei letztere beispielsweise zu einem Modul zusammengefasst können, wobei dann vorzugsweise entsprechend räumlich benachbarte oder konjugierte Phasenwerte so gebildet werden, dass diese einen zu einem Phasenwert entsprechenden Amplitudenwert simulieren, d.h. synthetisch erzeugen. Solche reinen Phasenmodulatoren bzw. entsprechende Kombinationen sind der Fachwelt grundsätzlich unter dem Begriff "Spatial Light Modulators" bekannt.

Vorteilhafterweise umfasst der zumindest eine Phasenmodulator oder das Modul eine oder mehrere Linsen, die an einem Ausgang des zumindest einen Phasenmodulators oder des Moduls angeordnet sind. Mittels einer Linse und/oder Linsengruppe mit mehreren Linsen sind dann auch größere Pixelausdehnungen beim Phasen-Modulator möglich, beispielsweise zwischen 2 $\mu$m und 6 $\mu$m, die dann mittels der oder den Linsen optisch auf circa 1 $\mu$m verkleinert werden können.

Zweckmäßigerweise umfasst die Abbildungseinrichtung zumindest zwei optische Hologramm-Sets, wobei zumindest eines der optischen Hologramm-Sets winkelverstärkend ausgebildet ist und zumindest eines der optischen Hologramm-Sets winkelverstärkungsneutral ausgebildet ist. Damit lässt sich auf einfache und effiziente Weise eine Winkelverstärkung erreichen und gleichzeitig beispielsweise eine reflektive Weiterleitung des Projektionsstrahls der Projektionseinrichtung in ein Auge eines Benutzers, wenn das winkelverstärkungsneutral ausgebildete Hologramm-Set im Wesentlichen reflektierend ausgebildet wird.

Zweckmäßigerweise umfasst die Abbildungseinrichtung drei optische Hologramm-Sets, wobei zwei der drei optischen Hologramm-Sets überwiegend transmittierend ausgebildet sind, wobei eines dieser zwei überwiegend transmittierend ausgebildeten optischen Hologramm-Sets winkelverstärkend ausgebildet ist und wobei ein drittes optisches Hologramm-Set überwiegend reflektierend ausgebildet ist. Damit lässt sich auf einfache und effiziente Weise eine optische Winkelverstärkung erreichen und gleichzeitig eine reflektive Weiterleitung des Projektionsstrahls der Projektionseinrichtung in ein Auge eines Benutzers.

Vorteilhafterweise sind die drei optischen Hologramm-Sets im Wesentlichen in Blickrichtung eines Nutzers sequentiell hintereinander angeordnet, wobei das winkelverstärkend ausgebildete optische Hologramm-Set zwischen den beiden anderen optischen Hologramm-Sets angeordnet ist. Einer der damit erzielten Vorteile ist, dass das winkelverstärkende Hologramm-Set homogen über seine laterale Erstreckung ausgebildet werden kann, was besonders für dicke Hologramme mit einer lateralen Dicke, z.B. >100 μm vorteilhaft ist.

Zweckmäßigerweise sind die mindestens zwei Hologramme in dem zumindest einen winkelverstärkenden optischen Hologramm-Set zumindest teilweise ineinander angeordnet sind. Damit können die beiden Hologramme platzsparend angeordnet werden.

Zweckmäßigerweise umfasst zumindest eines der optischen Hologramm-Sets mehrere Hologramme, welche in einer lateralen Richtung im Wesentlichen senkrecht zur Blickrichtung eines Nutzers in der Ebene, in der eine gedachte Verbindungslinie zwischen den beiden Augen des Nutzers liegt sowie die Geradeaus-Blickrichtung eines Nutzers, segmentweise nebeneinander angeordnet sind und/oder kontinuierlich in lateraler Richtung erstreckend ausgebildet sind. Damit kann eine von der lateralen Position abhängige Ablenkung der einfallenden Lichtstrahlen so bereitgestellt werden, dass das nachfolgende winkelverstärkende Hologramm-Set von der lateralen Position unabhängige Einstrahlwinkel erhält. Trotzdem bleibt die Definition "Hologramm-Set" erhalten, da der Übergang von fein verteilten Hologramm-Segmenten/Stücken/Teilen bis zum kontinuierlichen Verlauf fließend ist. Im Falle einer kontinuierlichen Erstreckung wird eine einfachere Implementierung ermöglicht, da beispielsweise mechanische Stepper nicht benötigt werden.

Vorteilhafterweise ist das zumindest eine winkelverstärkend ausgebildete optische Hologramm-Set in zumindest einer lateralen Richtung homogen ausgebildet. Dies ermöglicht unter anderem eine einfache Herstellung.

Zweckmäßigerweise umfasst das zumindest eine optische Hologramm-Set, vorzugsweise das zumindest teilweise reflektierend ausgebildete optische Hologramm-Set, ein oder mehrere Hologramme, welche segmentweise als planare oder gekrümmte reflektive Phasenfläche ausgebildet sind. Durch die planare und/oder gekrümmte reflektive Phasenfläche lässt sich auf einfache Weise phasenselektiv eine Reflexion in Richtung Auge erreichen.

Zweckmäßigerweise umfasst die Augendetektionseinrichtung einen Hartmann-Shak-Sensor und/oder eine Interferometrieeinrichtung zur Detektion, wobei die Interferometrieeinrichtung zur Aussendung der Detektion zumindest eines Referenzstrahls ausgebildet ist insbesondere wobei mehrere Referenzstrahlen durch gegenseitig kohärente Lichtquellen erzeugbar sind. Der Vorteil eines Hartmann-Shak-Sensors ist, dass dieser besonders einfach im Aufbau und damit kostengünstig in der Herstellung ist. Eine Interferometrieeinrichtung hat den Vorteil einer höheren Flexibilität, da im Gegensatz zu den in fixem Abstand angeordneten Mikrolinsen eines Hartmann-Shak-Sensors eine höhere räumliche Auflösung möglich ist bzw. diese entsprechend anpassbar ist. Vorteilhafterweise kann die Lichtwellenlänge des eingestrahlten Lichtes mit identischem Lichtweg (Projektor-Abbildungseinrichtung-Auge) genutzt werden. Optional ist auch eine separate Wellenlänge im nahen Infrarot möglich, wobei dann mindestens ein weiteres Volumenhologramm-Set in der Abbildungseinrichtung angeordnet wird.

Zweckmäßigerweise ist die Projektionseinrichtung ausgebildet, um Bildinformationen mittels zumindest zwei, vorzugsweise drei unterschiedlicher Wellenlängen zu übertragen, wobei pro unterschiedlicher Wellenlänge zumindest ein optisches Hologramm-Set angeordnet ist, welche vorzugsweise zumindest teilweise ineinander angeordnet sind. Kann die Projektionseinrichtung mittels zumindest drei unterschiedlicher Wellenlängen Licht projizieren, ist beispielsweise eine dreidimensionale, farbige Bilddarstellung in den Farben Rot Grün Blau - RGB - und damit eine realistisches dreidimensionales Bild möglich.

Vorteilhafterweise ist pro lateraler Richtung zumindest ein winkelverstärkend ausgebildetes optisches Hologramm angeordnet. Dies ermöglicht nicht nur eine Ablenkung der Wellenfronten/Strahlbündel Richtung Auge entlang einer lateralen Dimension, sondern auch einer zweiten lateralen Richtung: Damit wird nicht nur die Blickrichtung links/rechts, denn dahin werden die Augen besonders oft bewegt, sondern auch die andere laterale Blickrichtung oben/unten unterstützt, wobei letztere meist durch eine entsprechende Bewegung des Kopfes zumindest teilweise kompensiert wird. Analog zu dem zusätzlichen Parameter "Farbe" kann dieser zusätzliche Parameter "zweite laterale Richtung" durch Nebeneinanderschaltung und/oder Ineinanderschaltung der jeweils entsprechenden Hologramm-Sets umgesetzt werden.

Vorteilhafterweise umfasst die Augendetektionseinrichtung ein oder mehrere erste Kameras zur Ermittlung und/oder Überwachung der Position und/oder Richtung der Augen von einem oder mehreren Nutzern. Dies ermöglicht in flexibler als auch zuverlässiger Weise eine Detektion der Position und/oder Richtung der Augen. Alternativ kann beispielsweise mittels einer oder mehrerer erster Kameras die grobe Position der jeweiligen Nutzer bzw. deren Augen bestimmt werden und dann mittels eines weiteren Verfahrens, beispielsweise unter Ausnutzung von Interferometrie, die entsprechende Richtung der jeweiligen Augen bestimmt werden. Der Vorteil einer Kamera besteht u.a. darin, dass die Tatsache ausgenutzt werden kann, dass die Irisblende die vom Auge reflektierende Strahlung symmetrisch zum optischen Augenmittelpunkt abblendet. Die Bestimmung der Augenrichtung bzw. Position erfolgt hier also über einen von der Retina zurückgestreuten Lichtanteil aus einem beispielsweise vorher für die dreidimensionale Information eingestrahlten Lichtstrahlbündel. Dabei wird vorteilhafterweise die nahezu identische Lichtreflektion ausgenutzt, wenn das Auge in Ausbreitungsrichtung des Lichtstrahlbündels schaut. Eine Kombination mit einem Hartmann-Shak-Sensor und/oder einer Interferometrieeinrichtung erhöht die Genauigkeit der Detektion.

Vorteilhafterweise ist das optische System als Brille ausgebildet, wobei die Abbildungseinrichtung in zumindest einem Glas der Brille angeordnet ist. Damit kann jedem Nutzer auf einfache Weise ein kleines und mobiles optisches System zur Verfügung gestellt werden, welches in flexibler Weise an den jeweiligen Nutzer anpassbar ist.

Vorteilhafterweise umfasst das optische System mindestens eine, insbesondere zwei zweite Kameras, zur Aufnahme eines Umgebungsbildes. Damit lassen sich beispielsweise Umgebungsbilder zusätzlich aufnehmen, sodass einem Nutzer vergrößerte Umgebungsbilder angezeigt werden können. Dies ermöglicht weitere Anwendungsfelder.

Zweckmäßigerweise ist eine Verarbeitungseinrichtung zur Verarbeitung von Aufnahmen der mindestens einen zweiten Kamera angeordnet oder mit dem optischen System verbindbar, insbesondere wobei die Verarbeitungseinrichtung zur fotogrammetrischen Auswertung der aufgenommenen Umgebungsbilder ausgebildet ist. Mittels einer fotogrammetrischen Auswertung können beispielsweise, wenn der Benutzer an einem Gegenstand oder dergleichen vorbei geht und diesen mit einer oder mehrerer Umgebungskameras einer Brille betrachtet, laufend Aufnahmen aus unterschiedlichen Winkeln gemacht werden. Die Verarbeitungseinrichtung verarbeitet dann die entsprechenden Aufnahmen fotogrammetrisch und kann daraus dann mittels bekannter Verfahren ein realistisches dreidimensionales Bild berechnen.

Vorteilhafterweise umfasst das optische System einen Projektor, der zur Erzeugung eines insbesondere statischen Belichtungsmusters ausgebildet ist. Der Projektor kann bei der Ausführungsform des optischen Systems als Brille in einem Bügel zwischen den beiden Brillengläsern integriert sein. Mittels eines vom Projektor bereitstellbaren Belichtungsmusters, welches statisch oder auch dynamisch veränderbar sein kann, kann ein Belichtungsmuster auf eine reale Szene geworfen werden. Nimmt dann die zumindest eine Kamera das Belichtungsmuster auf Gegenständen der Umgebung auf, sind die Oberflächen der Gegenstände besser auswertbar als nur durch das homogene Umgebungslicht aufgenommene Oberflächentexturen. Bewegt sich ein Nutzer des optischen Systems nun an einem Gegenstand vorbei, wird damit die Genauigkeit des erfassten Gegenstands, der Szene oder dergleichen noch weiter erhöht. Mittels bekannter Verfahren, beispielsweise Auswertemethoden, die unter dem Begriff "Structure from Motion (SFM)" bekannt sind, kann dann ein realistisches dreidimensionales Bild berechnet werden. Besonders vorteilhaft hierfür sind nahe gelegene Gegenstände oder Objekte, welche dann mit hoher Auflösung erfasst werden können.

Zweckmäßigerweise ist der Projektor zur Bereitstellung eines Belichtungsmusters mit einer oder mehrerer Wellenlängen im nahen Infrarot-Bereich ausgebildet. Der nahe Infrarotbereich umfasst insbesondere Wellenlängen zwischen 780 nm bis 3 $\mu$m. Vorzugsweise wird eine Wellenlänge von 850 nm verwendet. Damit werden störende Effekte im sichtbaren Bereich durch die Projektion des Musters vermieden.

Vorteilhafterweise wirkt die Verarbeitungseinrichtung mit der Projektionseinrichtung und Abbildungseinrichtung derart zusammen, sodass die ausgewerteten Umgebungsbilder entsprechend der Blickrichtung eines Nutzers mit dem durch den transparenten Bereich der Abbildungseinrichtung sichtbaren Umgebungsbereich zumindest teilweise überlagerbar sind. Damit kann ein computererfasster Koordinatenursprung für einen Gegenstand oder eine Gegenstandsgruppe definiert oder ermittelt werden. Dies erhöht die Flexibilität des optischen Systems hinsichtlich möglicher nachfolgender Anwendungen.

Vorteilhafterweise umfasst das optische System, insbesondere die Abbildungseinrichtung, einen Dimmer, der so ausgebildet ist, sodass der Grad an Transparenz der Abbildungseinrichtung anpassbar, vorzugsweise absenkbar, ist. Damit lässt sich der durch den transparenten Bereich der Abbildungseinrichtung betrachtete Umgebungshintergrund zumindest teilweise abschwächen, was die Wahrnehmung von mittels der Projektionseinrichtung projizierten Bildinformationen durch einen oder mehrere Nutzer verbessert.

Zweckmäßigerweise ist mittels des Dimmers und/oder der Verarbeitungseinrichtung zusammen mit der Projektionseinrichtung ein sichtbarer Hintergrund einer realen Szene oder Umgebung farblich zumindest teilweise homogener ausgestaltbar. Damit lässt sich beispielsweise der Hintergrund personenbezogen farblich weiß oder einfarbig gestalten und ermöglicht damit eine leicht getönte weiße oder einfarbige Leinwand zur Projektion eines zwei oder dreidimensionalen Bildes. Das eigentliche Bild wird dann als Overlay auf diese zumindest teilweise oder leicht getönte weiße oder einfarbige Leinwand projiziert. Auf diese Weise ist das Bild bei Tageslicht besser durch einen Nutzer oder auch durch mehrere Nutzer wahrnehmbar.

Zweckmäßigerweise sind die Bildinformationen in Form von Markierungsinformationen für einen Gegenstand oder dergleichen bereitstellbar, sodass mittels der Verarbeitungseinrichtung ein mittels des optischen Systems betrachteter Gegenstand anhand der Aufnahmen erkennbar ist und die Markierungsinformationen für einen oder mehrere Nutzer virtuell entsprechend auf dem Gegenstand als Overlay abbildbar sind. Damit lässt sich auf einfache Weise beispielsweise eine Anleitung zum Zusammenbau eines Schrankes auf die jeweiligen Schrankteile projizieren. Markierungsinformationen können allgemein jegliche Information(en) umfassen: Beispielsweise können diese dabei sowohl in Form von nonverbalen Symbolen wie Pfeile, etc. dargestellt werden als auch als entsprechender Text. Hierbei wird dann der Gegenstand mittels der Kameras für die Umgebungsbilder aufgenommen, die Verarbeitungseinrichtung erkennt den jeweiligen Gegenstand, in dem diese diesen mit entsprechenden Informationen der Bedienungsanleitung vergleicht und projiziert dann entsprechende Markierungsinformationen für einen Nutzer auf den entsprechenden Gegenstand.

Allgemein lassen sich damit beispielsweise dreidimensionale Informationen von extern kommend, z.B. Bauanleitung mit Pfeilen durch die Verarbeitungseinrichtung in die richtige dreidimensionale Position bringen und entsprechend anzeigen. Beispielsweise können mit einem 3D-Scanner von extern kommend diese Daten mittels der aus den Umgebungskameras bestimmten Positionen direkt zur optischen Überlagerung mit der tatsächlich sichtbaren Szene/Umgebung gebracht werden (Augmented Reality). Zusammen mit den Aufnahmen der zweiten Kamera(s) für die Umgebung steht so beispielsweise die erhaltene dreidimensionale Information auch für weitere Anwendungen oder Berechnungen zur Verfügung.

Vorteilhafterweise ist die Anzahl der kohärenten Lichtwellen zur Erzeugung eines virtuellen optischen Punktes ungerade ist, vorzugsweise beträgt diese zumindest 7, insbesondere zumindest 11, besonders vorzugsweise zumindest 13, insbesondere 13. Mittels zumindest 7 Lichtwellen kann eine nahezu seitenbandfreie virtuelle Wellenfront aus Punktlichtquellen erzeugt werden, sodass mit ausreichender Genauigkeit bzw. Auflösung ein zwei- oder dreidimensionales Bild erzeugt werden kann.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt

Fig. 1    eine Hilfsanordnung zur Veranschaulichung einer Ausführungsform der vorliegenden Erfindung;

Fig. 2    eine weitere Hilfsanordnung zur Erklärung einer Ausführungsform der vorliegenden Erfindung;

Fig. 3    eine weitere Hilfsanordnung zur Erklärung einer Ausführungsform der vorliegenden Erfindung;

Fig. 4    eine weitere Hilfsanordnung zur Erklärung einer Ausführungsform der vorliegenden Erfindung;

Fig. 5    in schematischer Form Teile eines optischen Systems gemäß einer Ausführungsform der vorliegenden Erfindung;

Fig. 6    in schematischer Form Teile eines optischen Systems gemäß einer weiteren Ausführungsform der vorliegenden Erfindung;

Fig. 7    in schematischer Form Teile eines optischen Systems gemäß einer weiteren Ausführungsform der vorliegenden Erfindung;

Fig. 8    in schematischer Form Teile eines optischen Systems gemäß einer weiteren Ausführungsform der vorliegenden Erfindung;

Fig. 9    in schematischer Form Teile eines optischen Systems gemäß einer weiteren Ausführungsform der vorliegenden Erfindung; und

Fig. 10    verschiedene Wahrnehmbereiche eines Auges.

Im folgenden werden die Hilfsanordnungen und Ausführungsformen der Erfindung anhand von Strahlverläufen, etc. entlang einer horizontalen Achse (links/rechts) erläutert, die in den folgenden Figuren in der Zeichenebene verläuft Selbstverständlich ist der tatsächliche Aufbau dreidimensional, d.h. die Hilfsanordnungen und Ausführungsformen weisen auch eine vertikale Achse, also eine Achse senkrecht zur Zeichenebene auf, der dann entlang der vertikalen Achse jeweils im Wesentlichen dem Aufbau entlang der horizontalen Achse entsprechen kann. Darüber hinaus beziehen sich, sofern nicht anders angegeben, die folgenden Figuren jeweils nur auf eine Wellenlänge. Insgesamt beziehen sich somit die folgenden Figuren - soweit nicht anders beschrieben - jeweils nur auf eine laterale Richtung und jeweils nur auf eine Wellenlänge.

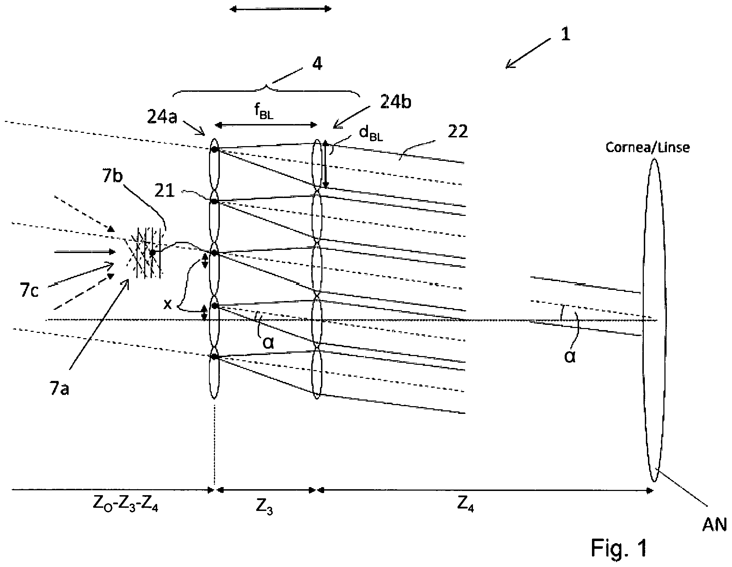

Fig. 1 zeigt eine Hilfsanordnung zur Veranschaulichung einer Ausführungsform der vorliegenden Erfindung.

In Fig. 1 ist eine Hilfsanordnung zur Erklärung der Projektion eines gedachten Objektpunktes im Unendlichen über kohärente virtuelle Lichtquellen gezeigt, welche einen kollimierten Beleuchtungsstrahl, d. h. bei Fokussierung des Auges auf Unendlich, unter einem Winkel $\alpha$ erzeugen. In Fig. 1 sind aus Gründen der Übersichtlichkeit keine Reflexion mit quasi-identischen Hin- und Rückwegen gezeigt. Ebenso verlaufen die Projektionswege entlang einer optischen Achse, welche durch die Kornea/Augenlinse terminiert werden, wobei die Retina ebenfalls nicht gezeigt ist.

Zunächst wird eine Situation angenommen bei der der Objektpunkt in unendlicher Entfernung (in Bezug auf die Brennweite des Auges betrifft dies Entfernungen über 4 Meter) mit (nahezu) parallelen Strahlen auf das Auge treffen soll. Um diese (nahezu) parallelen Strahlen vor dem Auge zu erzeugen, wird zunächst von einer virtuellen Lichtquelle 21 innerhalb jeder Mikrolinse eines ersten Mikrolinsen-Arrays 24a ausgegangen. Die jeweilige virtuelle Punktlichtquelle 21 ist bevorzugt in der Ebene der jeweiligen Feldlinse des ersten Mikrolinsen-Arrays 24a angeordnet. Da diese das Licht der virtuellen Punktlichtquelle 21 positionsabhängig ablenken, sonst aber kaum Einfluss auf die Strahlform haben, wird diese auch als Feldlinse (Feld) bezeichnet.

Nach Divergenz auf die nachfolgende Mikrolinse des zweiten Mikrolinsen-Arrays, ‚MLA' 24b transformiert diese den Strahl in einen (nahezu) kollimierten Strahl. Da der Gesamtstrahl aus vielen Teilstrahlen besteht wird hier auch von "Beamlets" 22 gesprochen. Beide MLAs 24a, 24b können daher identische Brennweiten $f = f_{Feld} = f_{BL}$ haben und haben auch genau diesen Abstand $Z_3$ voneinander. Diese beiden Mikrolinsen-Arrays 24a, 24b können Bestandteil einer Abbildungseinrichtung sein, welche in einem Brillen- oder Projektions-Glas angeordnet sind.

Für eine Abschätzung der Winkelablenkung $\alpha$ auf der Retina kann folgende Relation zwischen der Ablenkung vom jeweiligen Zentrum x und der Brennweite der Feldlinse $f_{Feld}$ verwendet werden:

$$\alpha \approx \tan(\alpha) = \frac{x}{f_{Feld}} \qquad \text{Gl. 1}$$

Für kleine Winkel (<5°) entspricht die Tangensfunktion eines Winkels näherungsweise dem Winkel selbst. Für eine Brennweite von $f_{Feld} = 0.5$ mm wird bei einer lateralen Verschiebung des virtuellen Punktes/Lichtquelle 21 von x = +/-25 $\mu$m ein Winkel von $\alpha = $ +/- 50 mrad (~6°) erzeugt, was dem Sehbereich bei voller Auflösung entspricht. Der Durchmesser $d_{Feld}$ einer solchen Mikrolinse kann einige 100 $\mu$m betragen. Besonders bevorzugt ist dabei dass $d_{Feld} = d_{BL}$ ist. Mit Mikrolinsen kann daher folgender Effekt erzielt werden: je kleiner die Brennweite $f_{BL}$, desto grösser der Ablenkwinkel a.

Die Pupille des Auges AN ist größer als der Durchmesser einer Mikrolinse, daher müssen mehrere Beamlets 22 eines Mikrolinsenarrays (in diesem Falle kollimiert) zu einem gesamten kollimierten Strahl 22' mit Durchmesser der gewählten Pupillen-Apertur zusammengefügt werden. Es müssen also eine entsprechende Anzahl von diesen virtuellen Lichtquellen 21 erzeugt werden, welche aber alle den gleichen relativen Abstand x (je nach Winkel) von dem jeweiligen Mikrolinsen-Mittelpunkt haben, wenn der Objektpunkt im Unendlichen liegt.

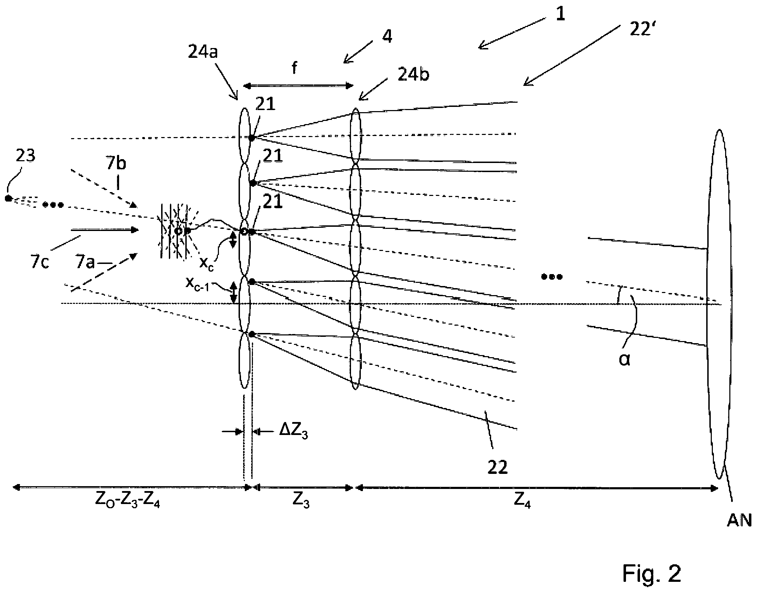

Fig. 2 zeigt eine weitere Hilfsanordnung zur Erklärung einer Ausführungsform der vorliegenden Erfindung.

In Fig. 2 zeigt eine Hilfsanordnung zur Erkennung der Projektion eines gedachten Objektpunktes 23 im Nahbereich mit der Entfernung zo vom Auge Innerkohärente virtuelle Lichtquellen 21 erzeugen einen leicht divergierenden gesamten Beleuchtungsstrahl 22' unter einem Winkel a. Durch den Nahbereich des Objektpunktes 23 fokussiert das Auge auf diesen.

Für den Fall, dass der Objektpunkt 23 nicht im Unendlichen liegt, sondern deutlich näher als z.B. die vorstehend genannte 4 m (hyperfokale) Distanz, wird das Auge mit divergierenden Strahlen/Beamlets 22 beleuchtet, wie in Fig. 2 gezeigt. In diesem Fall werden die virtuellen Lichtquellen 21 mit zunehmendem lateralen Abstand auf $x_{c,n} = x_c + n^* \Delta x_n$ vom jeweiligen Mikrolinsen-Zentrum verschoben und deren Position müssen sich in z-Richtung um $\Delta z_3$ verändern.

Somit ergibt sich für kleine Abstände, bzw. Brennweite $f_{BL} \ll (z_O - z_4)$ an lateraler Abstandsänderung pro Mikrolinse n:

$$\Delta x_n = n \cdot \frac{f_{BL} \cdot d_{BL}}{z_O - z_4 - f_{BL}} \qquad \text{Gl. 2}$$

Für die Verschiebung der Position der virtuellen Lichtquellen 21 um eine kleine Strecke in z-Richtung gilt:

$$\Delta z_3 = \frac{f_{BL}^2}{z_O - z_4 + f_{BL}} \approx \frac{f_{BL}^2}{z_O} \qquad \text{Gl. 3}$$

Für Objektabstände zo » $z_4$, $f_{BL}$, kann die Vereinfachung auf der rechten Seite der Gl. (3) mit genügend hoher Genauigkeit durchgeführt werden. So beträgt bei einem Abstand von zo = 100 mm und der bereits erwähnten Brennweite $f_{BL} = 0.5$ mm der relative Abstand $\Delta z3 = 2.5$ $\mu$m.

Nicht zu große Abstände $\Delta z_3$ können durch relative Phasenverschiebungen realisiert werden, was im nächsten Abschnitt beschrieben wird, zuzüglich der Erzeugung der virtuellen Lichtquellen 21.

Die virtuellen Lichtquellen 21 werden durch Überlagerung von kohärenten Lichtwellen mit begrenzter lateraler Ausdehnung erzeugt. Dies ist in den Fig. 1 und 2 an der Stelle von jeweils 3 sich überlagernden Wellen-Fronten 7a, 7b, 7c angedeutet, welche beispielsweise in lateraler Richtung (entlang deren Wellenfronten) z.B. nur einige 10 $\mu$m Breite aufweisen. Je mehr solcher Wellenfronten 7a, 7b, 7c verwendet werden, desto fokussierter ist der Punkt 21 mit vernachlässigbar geringen Seitenbanden.

Der minimale Winkel der Wellenfront 7a, 7b relativ zur Wellenfront 7c exakt senkrecht zur optischen Achse ist mit ΔΦ bezeichnet. Insgesamt bilden 2*m+1 eingestrahlte Wellenfronten 7a, 7b, 7c mit unterschiedlichen Winkeln der Wellenfronten 7a, 7b, 7c jeweils einen virtuellen Punkt/Lichtquelle 21. Dabei kann 2*m+1 zwischen 5 und 21 liegen, d.h. m zwischen 2 und 10. Die Winkel nehmen linear mit ganzzahligen Vielfachen m zu beiden Seiten der optischen Achse zu. Wenn die Phase der Welle 7c entlang der optischen Achse (Wellenfront senkrecht dazu) mit Null angenommen wird, dann gilt für die notwendigen Phasenverschiebungen Δδ in Abhängigkeit der gewünschten Relativposition $\Delta z_3$:

$$\Delta\delta = 2\pi \cdot \frac{\Delta z_3}{\lambda} \cdot \sqrt{\left(1 + (m\Delta\phi)^2\right)} \qquad \text{Gl. 4}$$

In Gl. 4 geht auch direkt die Wellenlänge λ des verwendeten Lichtes ein. Die Phasenverschiebungen Δδ für den Fall des Objektpunktes im Unendlichen sind nach Gl. 4 identisch Null, da $\Delta z_3 = 0$, d. h. die virtuellen Punkte/Lichtquellen 21 liegen alle direkt in der Hauptebene des Mikro-/Feldlinsen-Arrays 24a, was in Fig. 1 gezeigt ist.

Um die einzelnen Beamlets 22 zu einem gesamten Strahlenbündel 22' "ohne Zwischenräume" zu vereinen, müssen die Mikrolinsen des Mikrolinsenarrays 24b in der Eingangsseite bei voller Apertur ausgeleuchtet werden. Dazu muss der jeweilige virtuelle Lichtpunkt/Lichtquelle 21 in lateraler Ausdehnung klein genug sein, was wiederum durch lateral begrenzte Strahlen Wellen-Fronten mit vergleichsweise hohem Einstrahlwinkeln m*ΔΦ erreicht wird. Grob muss für den größten Winkel die Bedingung:

$$m \cdot \Delta\phi \approx \frac{d_{BL}}{2 \cdot f_{BL}} \qquad \text{Gl. 5}$$

gelten. Bei einer bspw. angenommen Brennweite $f_{BL}$ = 0.5 mm und einem Durchmesser von $d_{BL}$ = 0.4 mm, ergibt sich ein maximaler Winkel zu m*ΔΦ = +/-400 mrad. Wenn Randeffekte ausgeklammert werden, dann sind beispielsweise +/- 200 mrad ein ausreichender Winkelbereich. Besonders bevorzugt kann eine Brennweite im Bereich 0.3 - 1 mm und ein Durchmesser im Bereich 0.2 - 0.5 mm verwendet werden.

Bei einer Strahlform mit Gauß-Profil - was vorteilhaft sein kann - muss der Strahl einen noch größeren maximalen Winkel haben, allerdings nimmt die Strahlamplitude dann auch mit wachsendem Winkel ab. Vorteilhaft kann ein Wert

$$m >= +/- 6$$

sein, d. h. insgesamt 13 Einstrahlwinkel um einen nahezu seitenbandenfreien virtuellen Punkt 21 zu erzeugen. Unter bestimmten Bedingungen - beispielsweise wenn Interferenzerscheinungen ausgenutzt werden können - kann die Anzahl m auch auf m = +/- 3 also 7 Einstrahlwinkel reduziert werden.

Für oben angegebenen maximal sinnvollen Einstrahlwinkel von etwa +/- 200 mrad müsste allerdings eine recht große Eingangs-Apertur vorgehalten werden. Bei einem angenommenen Abstand eines Projektors, beispielsweise ein Mikro- oder Picoprojektor, von 20 mm wären dies etwa 9 mm. Das wäre mit einem kompakten Aufbau wie z.B. in einem Brillengestell nicht vereinbar.

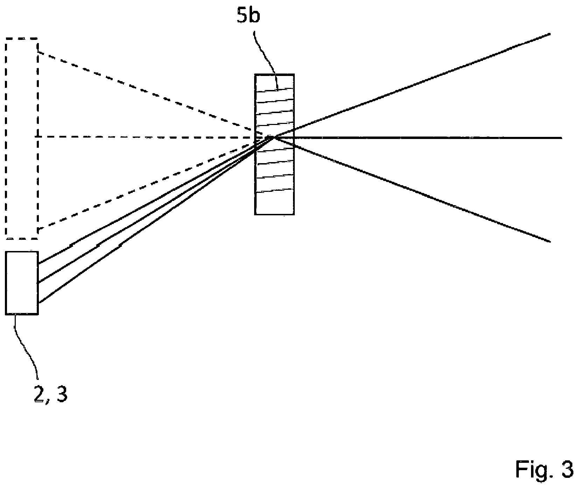

Nachfolgend in der Fig. 3 wird beschrieben wie dies im Sinne einer Miniaturisierung der Projektions-Einrichtung 2 erreicht wird.

Fig. 3 zeigt eine weitere Hilfsanordnung zur Erklärung einer Ausführungsform der vorliegenden Erfindung.

In Fig. 3 ist eine Detailansicht zur Veranschaulichung der Winkelumsetzung bzw. Winkelverstärkung von einer kleinen und kompakten Projektionseinrichtung für ein großes Winkelspektrum vor dem Mikrolinsen-Array 24a, 24b gezeigt. Die gestrichelt dargestellte Projektionseinrichtung 2 würde sich ergeben, wenn kein Volumenhologramm 5b zur selektiven Winkelumsetzung eingesetzt würde. Die Bragg-Ebenen sind in Fig. 3 nur beispielhaft zu dem Zentralstrahl (Winkel n = 0) angedeutet, bei 2m+1 Bragg-Ebenen liegen diese "übereinander".

In Fig. 3 wird gezeigt, wie mittels geringem Winkelspektrum - d. h. kleinen Abmaßen, insbesondere Apertur bei der Projektionseinrichtung 2 - am Ort der Feldlinse trotzdem die geforderten hohen Einstrahlwinkel erreicht werden können. Der Übersicht halber nur m = +/-1 - und der Strahl mit Winkel 0 - gezeigt (2*m+1 = 3). Fig. 3 zeigt, dass hier drei Lichtstrahlen mit einem jeweiligen Winkel mit kleinem Einstrahlbereich mittels eines Volumen-Hologramm-Sets 5b in drei Lichtstrahlen mit einem jeweiligen Winkel mit großen Ausstrahlbereich (bzw. Einstrahlbereich am Ort der Feldlinse) umgesetzt werden können. Da mehrere Volumen-Hologramme nebeneinander und/oder ineinander integrierbar sind und die Bragg-Bedingung für jeden Einstrahwinkel selektiv "einstellbar" ist, kann so ein kleiner Winkelbereich in einen großen umgesetzt werden. Damit wirkt dieses Element 5b optisch winkelverstärkend.

Zusammengefasst liegen Ebenen mit Brechungsindex-Hub (positiver oder negativer Natur) gegenüber dem Trägermaterial derart in einem Winkel im Material, dass diese Ebenen eine Art "Spiegel" für den einfallenden Strahl unter dem sogenannten Bragg-Winkel darstellen und diesen Strahl dann entsprechend ablenken. Da diese Ebenen in nahezu beliebigen Winkeln in Tiefenrichtung nebeneinander und/oder auch ineinander integriert in das Trägermaterial einschreibbar sind, können Strahlen mit völlig unterschiedlichen Einstrahlwinkeln in wiederum völlig andere unterschiedliche Ausgangswinkel umgesetzt werden, in Transmission als auch in Reflexion.

Die eindimensionalen Volumen-Hologramm-Sets können so dimensioniert werden, dass die einzelnen Volumen-Hologramme nur eine (laterale) Dimension die Bragg-Bedingung erfüllt, während die andere kaum beeinflusst wird. Bei Volumen-Hologrammen kann durch Hintereinander- und/oder Ineinanderschaltung beider lateraler Dimensionen (z. B. x und y) ein vollständig zweidimensionales Element bzw. Volumen-Hologramm-Set realisiert werden.

Zur Erzeugung eines Farbbildes werden aber mindestens 3 Wellenlängen z.B. rot grün, blau, RGB, verwendet um einen realistischen Eindruck zu erhalten. Sowohl aktive als auch passive opto-elektronische Elemente für die Projektionseinrichtung 2 können ausgebildet werden, mehrere Wellenlängen auszusenden bzw. zu empfangen. Auch bei Volumen-Hologramm-Sets können mehrere Hologramme für verschiedene Wellenlängen, insbesondere jeweils eines für eine Wellenlänge, nebeneinander und/oder ineinander integriert werden.

Um die Reduktion des eingestrahlten Winkelbereiches zur Erzeugung eines virtuellen Punktes/Lichtquelle 21 hier abschätzen zu können, wird die Winkelselektivität eines volumenholografischen Gitters abgeschätzt. Diese ist u. a. eine Funktion der Dicke des Volumengitters und kann je nach Brechungsindexmodulation mehrere 100 μm betragen. In diesem Falle sind beispielsweise 1 - 5 mrad Akzeptanzwinkel möglich. Unter der Annahme von 3 mrad Akzeptanzwinkel werden bei m = +/- 6 (angenommene Mindest-Anzahl der benötigten Strahlen symmetrisch um einen Zentrumsstrahl m=0) etwa +/- 18 mrad notwendig. Damit reduziert sich der Platzbedarf im Wesentlichen senkrecht zur Geradeaus-Blickrichtung eines Nutzers für eine Projektions-/ Detektionseinheit 2, 3 auf nur noch knapp 1 mm (bei 20 mm Projektionsabstand), was bequem in einem Brillenbügel Platz hätte.

Der Projektions-Teil der PD-Einheit 2, 3 besteht vorzugsweise aus einem pixelbasierten Amplituden/Phasen-Modulator, wobei dieser insbesondere Pixelgrößen im μm-Bereich aufweist. Alternativ können aber auch reine PhasenModulatoren verwendet werden, wenn benachbarte oder konjugierte Phasenwerte einen "synthetischen" Amplitudenwert generieren. Solche Phasenmodulatoren sind auch als "Spatial Light Modulators" bekannt.

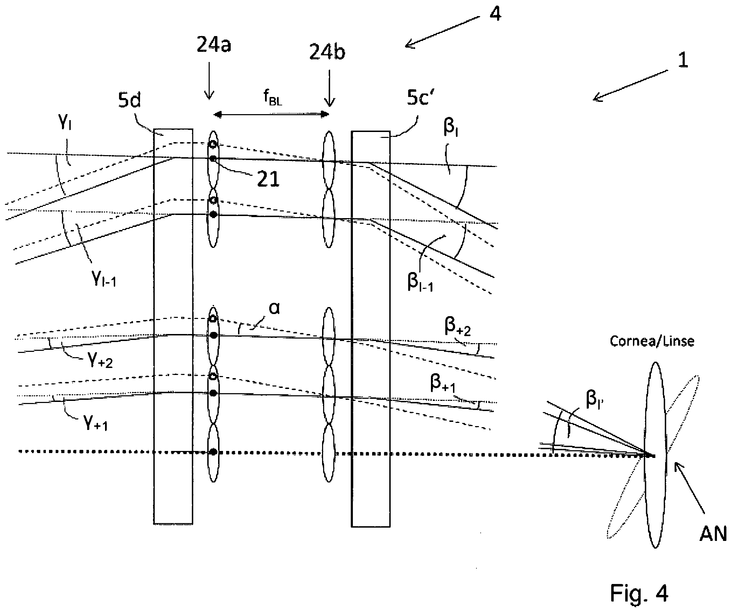

Fig. 4 zeigt eine weitere Hilfsanordnung zur Erklärung einer Ausführungsform der vorliegenden Erfindung.

In Fig. 4 ist eine Hilfsanordnung zur Beschreibung und Erreichung des Sehfeldes um den maximalen Winkel $\beta_i$ in Transmissionsanordnung gezeigt. Dies geschieht mit dem Volumen-Hologramm-Set 5d und dem Volumen-Hologramm-Set 5c' (der Übersichtlichkeit halber ist das Volumen-Hologramm-Set sonst mit Bezugszeichen 5c bezeichnet hier in Transmission und deshalb mit Bezugszeichen 5c' bezeichnet, nicht in Reflexion gezeigt), welches pro Mikrolinse i' den Winkel um $\Delta\gamma$ und

$\Delta\beta$ erhöht, d. h. Erhöhung des Index i+1. Das Volumen-Hologramm-Set 5d ist ausgebildet um winkelselektiv eine Erhöhung des Winkelbereiches am Ort der von der lateralen Position abhängigen Feldlinse zu ermöglichen. Wie auch in den vorangegangenen Figuren ist in Fig. 4 der Übersichtlichkeit halber nur der Zentralstrahl (durchgezogene Linie) eingezeichnet. Die gestrichelte Linie beschreibt die Situation bei der durch die Parallelverschiebungen der Strahlenbündel ein Winkel $\alpha$ durch die jeweilige Feldlinse des ersten Mikrolinsenarrays 24a erzeugt wird. Ebenfalls der Übersichtlichkeit halber ist der maximale Winkel der Rotation des Auges mit $\beta_{i'}$ um den Linsenmittelpunkt und nicht um den Augenmittelpunkt angedeutet. Aus Gründen der Übersichtlichkeit wurde auch auf die untere spiegelsymmetrische Mikrolinsen- und Hologrammanordnung verzichtet.

Die Feldlinsen bzw. Mikrolinsen innerhalb des Mikrolinsen-Arrays 24a lenken die Strahlen um einen gewissen Winkel ab, wenn der virtuelle Lichtpunkt/Lichtquelle 21 außerhalb der jeweiligen Linsenmitte einstrahlt. Es wird zunächst angenommen, dass der Einstrahlwinkel vor der Feldlinse/Mikrolinse parallel zur optischen Achse verläuft. Um den Winkelbereich abschätzen zu können, sei beispielhaft folgendes angenommen: die Brennweite jeder Mikrolinse sei $f_{BL}$ = $f_{Feld}$ = 0.5 mm und der Durchmesser jeder Linse sei $d_{BL}$ = $d_{Feld}$ = 0.4 mm. Bei still stehendem Auge wäre der Winkelbereich, welcher sich alleinig über die Feldlinse/Mikrolinse unter Einschluss von Randeffekten abdecken ließe, etwa +/-200 mrad - oder etwa 25° - was einem Bildfeld von 800 mm bei 2 Meter Entfernung entspräche.

Ein voller dreidimensionale Eindruck entsteht aber erst, wenn

a) etwa 120° Blickwinkel abgedeckt werden und
b) bei Rotation des Auges der Sehbereich mit voller Auflösung (-6°) beibehalten wird.

Fig. 4 zeigt nun, wie neben der Feldlinse/Mikrolinse das Volumenhologramm-Set 5c' den Sehwinkelbereich erhöhen kann, so dass die obigen Forderungen a) und b) erfüllbar sind.

$$\beta_i - \beta_{i-1} = \Delta\beta = \frac{d_{BL}}{z_4} \qquad \text{Gl. 6}$$

Nach Gl. 6 ist der differenzielle Winkel $\Delta\beta$ = 20 mrad bei einem angenommenen Durchmesser der Mikrolinse von $d_{BL}$ = 0.4 mm und einem Abstand Abbildungseinrichtung 4 zu Auge AN von etwa $z_4$ = 20 mm, sofern man sich im Bereich nahe der optischen Achse befindet. Bei größeren Abständen verringert sich der Wert. Um einen Strahldurchmesser von beispielsweise etwa 3,5 mm bereitzustellen (2 mm wegen des optimalen Pupillendurchmessers und unter Annahme einer Reserve) werden vorzugsweise etwa 2*4 + 1 Mikrolinsen genutzt, was etwa $\beta_{i'} - \beta_{i'-5}$ = 4*20 = +80 mrad (Index 0 —

4) vorsieht. Bei einem oben angenommenen maximalen Winkelbereich von +/-200 mrad ist dies möglich um

- ein hochaufgelöstes Sehfeld von +/- 3° (= +/- 50 mrad), und
- eine Korrektur für das volle Sehfeld von max. +/- 80 mrad, und
- eine Reserve von +/- 70 mrad

zu erlauben.

Mit dem obigen Winkelbereich und der Ausrichtung der lateral segmentierten Hologramme innerhalb des Volumenhologramm-Set 5c' auf das Auge AN ist das Sehfeld durch die Größe der Abbildungseinrichtung im Brillenglas begrenzt. Bei Glas-Größen von 50 mm in lateraler Richtung oder mehr in z.B. der horizontalen Richtung kann der gewünschte max. Sehwinkel von 120° erreicht werden, d.h. das Auge kann sich um den β Winkel von +/- 60° drehen.

Bevorzugt sind eine untere Grenze von etwa +/- 200 mrad was bei einer Brennweite $f_{BL}$ = 0.5 mm etwa einem Mikrolinsen-Durchmesser von $d_{BL}$ = 0.2 mm entspricht. Umgekehrt könnte bei etwas größerem Mikrolinsen-Durchmesser die Brennweite etwas größer sein.

Für die Anwendung einer Projektionsfläche /-glas ist der Freiheitsgrad größer, da die Größe (in dem Fall Beschränkung auf die Breite) im Wesentlichen nicht beschränkt ist. Zuerst muss aus der Distanz der Personen-Gruppe und dem maximalen Sehwinkel (Annahme +/- 60° wie oben ausgeführt) die Größe der Fläche / des Glases bestimmt werden. Bei einer Person wären dies bei 2 Meter Abstand, volle 7 Meter für das Glas. Bei 3 bis 4 angenommenen Personen auf einem Raum von lateral 1 Meter, vergrößert sich die Breite der Fläche / des Glases auf beispielsweise 8 Meter.

Um das volle Sehfeld ausnützen zu können, wird bei Ausführungsformen der vorliegenden Erfindung nicht die volle Auflösung vorgehalten. Es ist bekannt, dass im Randbereich (>+/- 3°) des Auges nur mit deutlich verminderter Auflösung (etwa 1/5) wahrgenommen werden kann ("noch im Augenwinkel erkannt"). In diesem Falle muss nicht die volle Pupille mit einem Durchmesser von 2 mm (definiert durch 5 - 10 Mikrolinsen) für einen Gesamtstrahl 22 ausgeleuchtet werden, sondern ein etwa 5-mal kleinerer Durchmesser, d. h. etwa 400 $\mu$m reicht aus. Nach obigen Abschätzungen müssen nur 1 - 2 Mikrolinsen zu dem Randfeld - definiert durch das volle Sehfeld abzüglich des Sehfeldes bei voller Auflösung - beitragen.

In der Fig. 4 ist eine idealisierte Anordnung in Transmission gezeigt. Um eine optische Achse herum werden von links kommend die Zentral-Strahlen mit den Winkeln $\gamma_{l'}$ durch das lateral segmentierte Volumen-Hologramm-Set 5d zunächst in einen Winkel quasi-parallel zur optischen Achse gedreht. Weitere Aufgabe dieses ersten Volumen-Hologramm-Sets 5d ist die winkelselektive Umsetzung der 2*m+1 Strahlen (um den Zentral-Strahl) in größere Winkel um einen kleinen virtuellen Spot 21 in der Ebene der Feldlinse zu definieren (s. oben). Da diese Winkelumsetzung mit kleinem Akzeptanzwinkel erfolgt, ist dieses erste Volumen-Hologramm-Set 5d eher "dick" (100 $\mu$m bis 3 mm) verglichen mit dem zweiten Volumen-Hologramm-Set 5c' mit Dicken zwischen wenigen 10 $\mu$m bis 30 $\mu$m. Durch die laterale Position relativ zur jeweiligen optischen Achse der jeweiligen Mikrolinse des ersten Mikrolinsenarrays 24a wird der Strahl in einem Winkel $\alpha$ (bei unendlich entferntem Punkt) auf die jeweilige Mikrolinse des zweiten Mikrolinsenarrays 24b gelenkt, um ein Beamlet 22 mit dem Durchmesser von etwa dem der jeweiligen Mikrolinse 24a des ersten Mikrolinsenarrays 24a zu formen. Dieser Strahl 22 propagiert zusammen mit den parallelen Nachbar-Strahlen in einem Strahlenbündel 22' auf das Volumen-Hologramm-Set 5c' zu, wird dort um den Winkel $\beta_{l'}$ umgesetzt und propagiert danach auf die Linse/ Cornea des Auges AN zu. Je nach Rotation des Auges AN sind - für eine bestimmte Strahlrichtung - verschiedene Gruppen des Mikrolinsen-Arrays 24a, 24b optisch anzusteuern.

Im Folgenden werden nur bevorzugte Anwendungen der vorliegenden Erfindung beschrieben: Brille und Projektions-Glas.

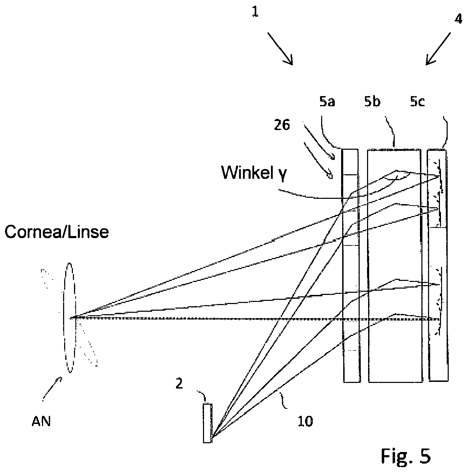

Fig. 5 zeigt in schematischer Form Teile eines optischen Systems gemäß einer Ausführungsform der vorliegenden Erfindung.

In Fig. 5 ist ein optisches System gezeigt, welches drei Volumen-Hologramm-Sets 5a, 5b, 5c umfasst. Die Volumen-Hologramm-Sets 5a, 5b, 5c sind hier im Gegensatz zu nachfolgenden Figuren, in denen sie in einem Volumen-Hologramm-Set zusammengefasst werden, einzeln ausgeführt und dargestellt. Das Mikrolinsen-Array 24, mit welchem Wellenfelder (idealerweise) parabolisch krümmbar sind, kann ganz allgemein weggelassen werden, wenn der virtuelle Punkt durch eine Anzahl virtueller Punkte - ein ausgedehntes Wellenfeld definierend - ersetzt wird. Dies geschieht durch geeignete Amplituden- und Phasen-Ansteuerung des Mikro-Projektors 2. Mit Blickrichtung vom Auge AN eines Nutzers weg sind diese Volumenhologramm-Sets 5a, 5b, 5c sequentiell hintereinander angeordnet, wobei das erste Volumen-Hologramm-Set 5a winkelverstärkungsneutral, d.h. nicht winkelverstärkend, und transmittierend ausgebildet ist. Das zweite Volumen-Hologramm-Set 5b ist winkelverstärkend und transmittierend ausgebildet während das dritte Volumen-Hologramm-Set 5c reflektierend und winkelverstärkungsneutral ausgebildet ist.

Weiter in Fig. 5 sind in den nicht winkelverstärkend ausgebildeten Hologramm-Sets 5a, 5c laterale Segmente 26 gezeigt, welche im Wesentlichen Einzelhologramme darstellen und lateral aneinandergereiht sind. Diese EinzelHologramme der Hologramm-Sets 5a, 5c ermöglichen eine von der lateralen Position abhängige Winkelablenkung für alle Lichtstrahlen, die an dieser Position einstrahlen.

Das winkelverstärkend ausgebildete Hologramm-Set 5b, angeordnet zwischen den beiden nicht-winkelverstärkend ausgebildeten Hologramm-Sets 5a, 5c weist mehrere Volumen-Hologramme auf, vorzugsweise in der Anzahl 7 oder 13, die im Wesentlichen ineinander "gemultiplext" sind, also ineinander bzw. überlagernd angeordnet. Winkel der zentralen Einfall- und Ausfallstrahlen sind um den Drehwinkel γ von der lateralen Position unabhängig. Dieses Volumen-Hologramm-Set 5b ist besonders einfach herstellbar.

Das winkelverstärkend ausgebildete Hologramm-Set 5b ist dabei in axialer Richtung, also senkrecht zur lateralen Ausdehnung, dicker ausgeführt als jedes der beiden anderen Volumen-Hologramm-Sets 5a, 5c.

In Fig. 5 sind die Volumen-Hologramm-Sets 5a, 5b, 5c lediglich schematisch dargestellt. Bei Einsatz derselben beispielsweise im Glas einer Brille sind diese an die vorhandene Krümmung entsprechend anzupassen.

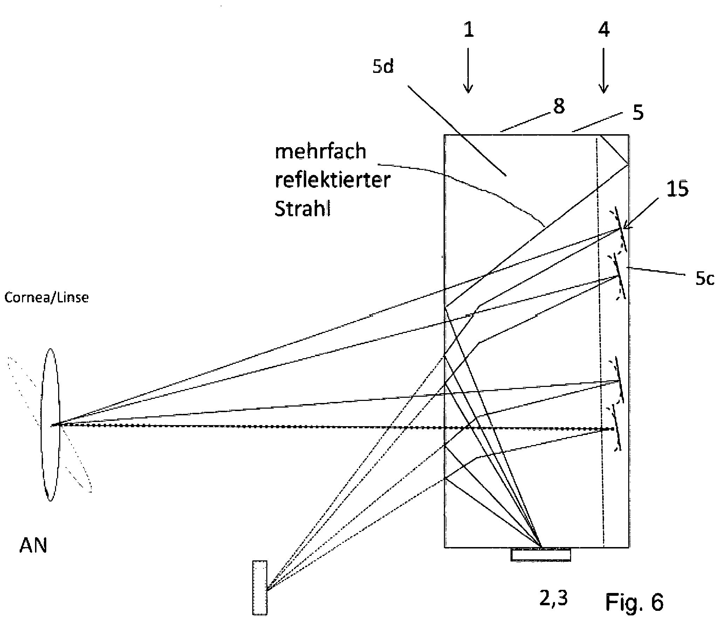

Fig. 6 zeigt schematische Teile eines optischen Systems gemäß einer weiteren Ausführungsform der vorliegenden Erfindung.

Obige Ausführungen zur Fig. 5 basieren auf der Freistrahlanordnung. Alternativ kann auch eine Anordnung via "optical waveguides" erfolgen, was in Fig. 6 beispielhaft ausgeführt ist. Am Rand des optical waveguides 8, was im einfachsten Fall ein Brillenglas mit planaren Oberflächen (also ohne Brechkraft) ist, wird über eine PD-Einrichtung/Projektions-/Detektionseinheit 2, 3 Licht in einem gewissen Winkelbereich eingestrahlt. Bei Einstrahlwinkeln etwa >45° - in geringer Abhängigkeit von der Glassorte - wird Licht an den Grenzflächen total - also wie beim Spiegel - reflektiert, so dass größere Strecken innerhalb der Glasscheibe 4 zurückgelegt werden können. Licht bei gewissen lateralen Positionen kann mittels Volumen-Hologramm-Set 5c ausgekoppelt werden. Hier gilt die Bedingung der Totalreflexion dann nicht.

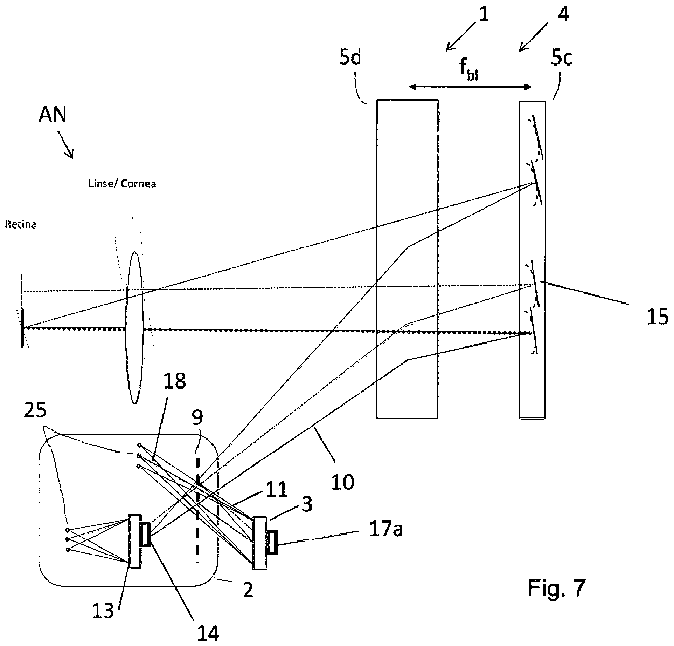

Wenn das Licht in Fig. 6 der Projektions-Einheit 2 unter einem gewissen Winkel abgestrahlt wird, so wird bei den ersten winkelabhängigen Umsetzern in dem Volumen-Hologramm-Set 5, umfassend ein winkelverstärkend ausgebildetes Volumen-Holgramm-Set 5d und ein reflexiv ausgebildetes Volumen-Hologramm-Set 5c, deren gedachte gemeinsame Grenze durch die gerade verlaufende gestrichelte Linie innerhalb des Volumen-Hologramm-Sets 5 angedeutet ist, die Bragg-Bedingung erreicht. In Fig. 7 sind dann die beiden Volumen-Hologramm-Sets 5d 5c separat ausgebildet und voneinander beabstandet. Die virtuelle PunktLichtquelle 21 wird dann innerhalb des Volumenhologramm-Sets 5d generiert, welche nach Reflexion durch das Volumenhologramm-Set 5c mit seinen segmentweise lateral angeordneten Reflexionselementen 15 in Form eines Mikrolinsen-Arrays (analog zu 24b und 5c' in Fig. 4) Richtung Auge AN gelenkt wird. Wird der Bereich der Bragg-Bedingung verlassen, d. h. wird der Winkel z.B. größer, so werden weitere Reflexionselemente 15 adressiert und das Auge AN wird von einem größeren kombinierten Strahl getroffen (was für die hohe Auflösung notwendig ist).

Ab einem gewissen Winkel (z. B. grösser 75°, bei 90° ist die theoretische Obergrenze) wird es schwierig die Bragg-Bedingung für das Transmissions-Hologramm-Set 5d einzuhalten. Da der optical waveguide 8 vorzugsweise auch nicht breiter als z. B. 3 mm sein soll, müssen Mehrfach-Reflexionen zugelassen werden, um eine gewisse laterale Strecke zu überbrücken. Die Bragg-Bedingungen der einzelnen Volumen-Hologramm-Sets 5d, 5c sind dabei so eingestellt, dass z. B. die unteren (nicht sichtbaren lateralen) Segmente des Volumenhologramm-Sets 5d in Fig. 6 diese nicht erfüllen und das Licht ungestört hindurch lassen. Das Licht kann dann ein oder mehrmals innerhalb des Hologramm-Sets 5 reflektieren bevor dann eines der oberen Segmente des Hologramm-Sets 5d diese Bedingung erfüllen und das Licht winkelverstärkt so umlenken, dass auch für die Reflexionselemente 15 im Hologramm-Set 5c die Bragg-Bedingung erfüllt ist. Ist diese erfüllt wird dann das Licht Richtung Auge reflektiert.

Da die reflektierenden Elemente 15, die typischerweise ein größeres Winkelspektrum tolerieren müssen, bevorzugt als "dünnes", insbesondere lateral segmentiertes Volumen-Hologramm-Set 5c ausgebildet werden, kann es notwendig sein, die Polarisation hier durch das erste dickere Hologramm-Set 5d einstrahlwinkelselektiv zu drehen, um eine optimale Entkopplung zwischen gewünschtem Durchlass und gewünschter Transmission für die Mehrfach-Reflexion zu erreichen.

Projiziertes Licht, welches via PD-Einrichtung 2, 3, letztlich durch die Retina wahrgenommen wird, wird auf dem identischen Weg durch die Pupille wieder Richtung Abbildungseinrichtung 4 reflektiert. Dort nehmen die gleichen Strahlrichtungskomponenten den gleichen Weg zurück in Richtung PD-Einrichtung 2, 3. Diese beinhaltet an deren Austritts-Apertur einen halbdurchlässigen Spiegel, welcher das Licht auf eine separate Detektionseinheit/-einrichtung 3 wirft. Eine Projektions-/Detektionseinheit (PD) umfasst also eine Projektionseinrichtung 2 und Detektionseinrichtung 3.

Fig. 7 zeigt in schematischer Form Teile eines optischen Systems einer weiteren Ausführungsform der vorliegenden Erfindung.

In Fig. 7 ist eine Anordnung einer Projektions-/Detektionseinrichtung 2, 3 gezeigt, um Licht im Falle von drei unterschiedlichen Augenpositionen sowie Augenpositionszuständen - Winkel - sowohl lateral als auch an einem Winkel rotiert einerseits auf die Retina zu projizieren und andererseits davon reflektiertes Licht wieder aufzufangen. Dieses reflektierte Licht wird auf einem zweidimensionalen Flächendetektor bezüglich Position und Winkelselektivität aufgenommen. Die Selektion kann beispielsweise über die eingezeichneten Referenzlaserstrahlen 18 interferometrisch erfolgen. Die Laserstrahlen 18 aus den gegenseitig kohärenten Lichtquellen 25, welche Projektions- und Detektorfläche beleuchten, weisen für den interferometrischen Detektionsansatz eine feste Phasenbeziehung auf. Drei Farben können dabei das Farbspektrum abdecken, beispielsweise Rot, Grün, Blau.

In Fig. 7 ist eine Vereinfachung dahingehend aufgezeigt, dass in nur noch einem Volumen-Hologramm-Set 5d mehrere Funktionen integriert sind:

- Winkelselektive Erhöhung einzelner Strahlen um einen virtuellen Punkt/Lichtquelle 21 mit hoher Strahldivergenz zu generieren.

- Von der lateralen Position abhängige Richtungsänderung des Strahls Richtung Reflexionselemente (analog der Funktion des Mikrolinsen-Arrays 24a). Erreicht wird dies durch geschickte/geeignete Überlagerung von Wellenfronten 7a, 7b, 7c aus der Projektions-Einrichtung 2, hervorgerufen durch eine positionsabhängige Steuerung von Amplituden und Phasenwerten auf der Projektions-Einrichtung 2. Danach kann der jeweilige virtuelle Punkt/Lichtquelle 21 auch eine etwas andere räumliche Form als ein Punkt aufweisen, beispielsweise eine lateral ausgedehnte Wellenfront.

Im Wesentlichen besteht die Abbildungseinrichtung 4 in dieser besonders bevorzugten Ausführungsform nur noch aus 2 Elementen:

- ein Volumen-Hologramm-Set 5d (bevorzugt in dicker Ausführung mit Dicken zwischen 0,5 und 2 mm), welches folgende Aufgaben hat:

   1. Segmentweise laterale Umsetzung der Ausbreitungsrichtung des Lichtes ohne Winkelverstärkung, d.h. winkelverstärkungsneutral
   2. Positionsunabhängige Winkelverstärkung und
   3a. Bereitstellung der Aufgaben einer Feldlinse (analog zu dem Mikrolinsenarray 24a in Figs. 1-4) derart, dass die Ausbreitungsrichtung von Licht eines virtuellen Punktes in Abhängigkeit der lateralen Position periodisch segmentweise zu den Reflexionselementen 15 des Volumen-Hologramm-Sets 5c variiert wird. Dabei können die Reflexionselemente 15 parabolisch gekrümmt ausgebildet sein oder
   3b. Zusammenfassung vieler virtuellen Punkte zu einer ersten Wellenfront derart, dass die Feldlinsenfunktion (analog zu dem Mikrolinsenarray 24a in Figs. 1-4) nicht mehr benötigt wird. Das Licht kann dann direkt zu den, insbesondere parabolisch, gekrümmten Reflexionselementen 15 im Volumenhologramm-Set 5c transmittiert werden oder
   3c. Zusammenfassung vieler virtuellen Punkte zu einer zweiten Wellenfront derart, dass die Feldlinsenfunktion (analog zu dem Mikrolinsenarray 24a in Figs. 1-4) nicht mehr benötigt wird. Das Licht kann dann direkt zu den planaren Reflexionselementen 15 im Volumenhologramm-Set 5c transmittiert werden.

In der Reflexionsrichtung "wirkt" das Volumen-Hologramm-Set 5d nicht, da die Bragg-Bedingungen nicht erfüllt sind. Für diese dicken Hologramme im Volumen-Hologramm-Set 5d können Abweichungen von einigen mrad bereits ausreichend sein. Im Gegensatz dazu sind die Reflexionselemente 15 in Form von Hologrammen in dem Volumen-Hologramm-Set 5c in bevorzugt dünner Ausführung (Dicke vorzugsweise zwischen 10 - 30 $\mu$m) ausgestaltet, da eine höhere Winkelakzeptanz notwendig ist, um Licht selektiv in Richtung Auge zu lenken. Licht von der Umwelt wird ungefiltert durch beide Volumen-Hologramm-Sets 5d, 5c durchgelassen.

Fig. 7 zeigt weiter einen vereinfachten Strahlenweg 10, 11 von der Projektionseinrichtung 2 Richtung Retina - 10 - als auch von der Retina zurück - 11 - zur Projektions-/Detektionseinrichtung (PD) 2, 3. In grober Näherung nimmt das Licht den identischen Weg 10, 11 in beiden Richtungen. Das Licht von der Retina wird allerdings nicht wie von einem Spiegel reflektiert, sondern wird eher gestreut. Mittels der gegenseitig kohärenten Lichtquellen 25 und in Zusammenwirken mit einem Phasenmodulator 13, der ausgangseitig eine Linse 14 aufweist, werden die Bildinformationen durch die Projektionseinrichtung 2 auf die Abbildungseinrichtung 4 projiziert. Im Projektions- und Detektionsstrahlengang 10, 11 ist ein Strahlteiler 9 angeordnet, um das zu detektierende Licht auf die Detektionseinrichtung 3 lenken.

Aufgrund der Anatomie des Auges müssen für die folgende Detektion, insbesondere für die Reflexion von der Retina des Auges AN folgende optische Regeln beachtet werden:

- Das Licht wird primär aus der eingestrahlten Richtung reflektiert, wobei die Intensität am größten ist, wenn das Lot der Cornea/ Linse mit der Einstrahlrichtung zusammenfällt ("Katzenauge")
- Das reflektierte Licht erscheint primär rot, da die Blutbahnen andere Farbanteile stärker absorbieren.

Obige Ausführungen können für die Detektion des Auges AN in Bezug auf seine laterale Position und/oder Winkel-Rotation genutzt werden, indem der an der Detektionsfläche aufgenommene Strahlfleck bzgl. Position und Winkel bestimmt wird, um auf die 2 in Fig. 7 gezeigten Augenpositionen (verschiedene Linsenpositionen) und die 2 Augenzustandspositionen (Augen-Rotationswinkel) schließen zu können. Wenn vereinfachend angenommen wird, dass sich das Auge AN auf der Mittelachse des Hologramm-Sets (5d, 5c) befindet und das optische System 1 beispielsweise in Form einer Brille diese Position nicht verlässt, dann ermöglicht die Winkelinformation Rückschlüsse auf die Augenrotation. Da die Brille aber nie exakt lateral positioniert sein wird, bzw. das Bildfeld größer ist als ein Reflexionselement 15 (z.B. 400 $\mu$m Durchmesser), ist es vorteilhaft zusätzlich laterale Information zu messen.

Um den Rotationswinkel der Linse, also des Auges AN zu messen, können alternativ oder zusätzlich zu Bildern einer ersten Kamera und der Erkennung der optischen Begrenzung durch die Irisblende folgende Verfahren bzw. Sensoren verwendet werden:

- Interferometrie mit Referenzstrahlen (s. Fig. 7)
- Hartmann-Shak Sensor, z.B. mit einem integrierten Mikrolinsen-Array

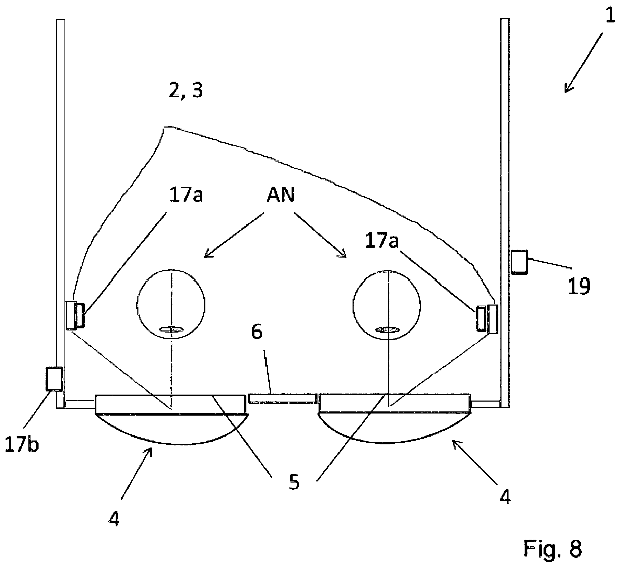

Fig. 8 zeigt in schematischer Form Teile eines optischen Systems gemäß einer weiteren Ausführungsform der vorliegenden Erfindung.

In der Fig. 8 ist vereinfacht ein optisches System 1 in Form einer Brille gezeigt. In beiden Brillenbügeln ist je eine PD-Einheit 2, 3 integriert, welche die Strahlen auf das jeweilige Brillenglas 4 projiziert. Dieses wirft jeweils die transformierten Strahlungen zurück auf das entsprechende Auge AN. Jedes Auge AN wird dabei von einer Projektions-/Detektionseinrichtung 2, 3 bestrahlt bzw. detektiert. Die Brillengläser 4 umfassen Volumen-Hologramm-Sets - wie in den Fig. 5-7 beschrieben - und ggf. diesen vorgeschaltet ist eine entsprechend gekrümmte Fläche, um volle passive sehverstärkende Wirkung zu erhalten. Weiterhin kann an der Brille 1 auch eine Verarbeitungseinrichtung 19, eine entsprechende Stromversorgung wie bspw. Batterien, Akkus, etc. oder dergleichen angeordnet oder mit dieser verbunden sein.

Zusätzlich kann die Brille umfassen:

- Externe Mini-Kamera(s) 17b (z. B. vorne am Gelenk des Brillengestells nahe der Gläser). Damit könnte z. B. der Inhalt einer Papierseite detektiert werden und diese über die 3D oder 2D Projektion vergrößert wieder dem Auge AN zugeführt werden. Das kann vorteilhaft sein, wenn die Brille für einfache Alltagsaufgaben ausreicht, aber eine zusätzliche Sehbrille nicht gewünscht ist

- Mikrophone, z. B. in der Nähe der Mini-Kameras um eine Richtwirkung zu erzielen. Zusammen mit einer unauffälligen Einkopplung des verstärkten Schalls in das Ohr einer meist älteren Person wäre dies ein sehr wirksames Hörgerät

- Unauffällige Schalleinkopplung ins Ohr zusammen mit einer 3D Visualisierung eines Konzert oder Bühnenauftritts würde den gesamten akustischen Eindruck verstärken

Die Brille kann auch einen Projektor 6, der zur Erzeugung eines Belichtungsmusters ausgebildet ist, umfassen. Der Projektor 6 kann beispielsweise in einem Bügel zwischen den beiden Brillengläsern integriert sein. Mittels eines vom Projektor 6 bereitstellbaren Belichtungsmusters, welches statisch oder auch dynamisch veränderbar sein kann, kann ein Belichtungsmuster auf eine reale Szene geworfen werden. Nehmen dann die zumindest eine Kamera das Belichtungsmuster auf Gegenständen der Umgebung auf, ist dieses besser auswertbar als eine nur durch Tageslicht aufgenommene Oberflächentextur. Bewegt sich ein Nutzer des optischen Systems nun an einem Gegenstand vorbei wird damit die Genauigkeit des erfassten Gegenstands, der Szene oder dergleichen noch weiter erhöht. Mittels bekannter Verfahren, beispielsweise Auswertemethoden, die unter dem Begriff "Structure from Motion" kann dann ein realistisches dreidimensionales Bild berechnet werden. Besonders vorteilhaft hierfür sind nahe gelegene Gegenstände oder Objekte, welche dann mit hoher Auflösung erfasst werden können. Die Bereitstellung eines Belichtungsmusters kann dabei beispielsweise mit einer oder mehrerer Wellenlängen im nahen Infrarot-Bereich erfolgen. Der nahe Infrarotbereich umfasst insbesondere Wellenlängen zwischen 780 nm bis 3 $\mu$m. Vorzugsweise wird eine Wellenlänge von 850 nm verwendet. Damit werden störende Effekte im sichtbaren Bereich durch die Projektion des Musters vermieden.

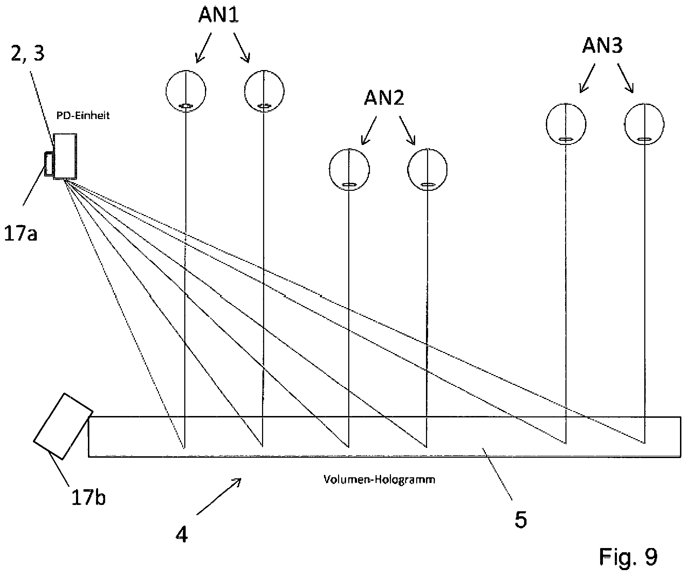

Fig. 9 zeigt Teile eines optischen Systems gemäß einer weiteren Ausführungsform der vorliegenden Erfindung.

In Fig. 9 ist in schematischer Form eine Anordnung eines optischen Systems 1 in Form eines dreidimensionalen Projektionsglases 4 für mehrere Personen - angedeutet über drei Augenpaare AN1, AN2, AN3 - gezeigt. Alle Augen(paare) AN1, AN2, AN3 werden dabei von einer Projektions-/Detektionseinheit 2, 3 bestrahlt bzw. detektiert. Das Volumen-Hologramm-Set 5 ist hier als Fenster oder Projektionsglas ausgebildet. Zusätzlich können weitere Elemente wie Doppel- oder Dreifachverglasung integriert werden. Darüberhinaus ist eine Übersichtskamera 17b im Bereich des Projektionsglases angeordnet, welche grob die Augenposition der Augen AN1, AN2, AN3 vorab bestimmen kann. Das Projektionsglas 4 gemäß Fig. 9 ermöglicht das Projizieren eines dreidimensionalen Bildes für mehrere Nutzer. Dabei genügt eine einzelne Projektions-/Detektionseinheit 2, 3 wobei diese insbesondere eine feinere Auflösung als die bei der Brille gemäß Fig. 8 bereitstellen kann, da nicht nur die Augenposition und der Augenpositionszustand für ein Auge, sondern für mehrere Augen AN1, AN2, AN3 vorzuhalten und zu detektieren sind.

Das Verfahren zur Bestimmung der Augenrotation wie zu Fig. 7 beschrieben lässt sich auch auf eine 3D-Projektionsfläche übertragen, auf welche mehrere Augen (also auch Personen) blicken. Hier muss dann die Detektionseinheit 3 größer verglichen mit den Abmessungen bei einer Brille sein, da die Winkel aufgrund der größeren Entfernungen feiner aufgelöst werden müssen. Ebenso ist auch der laterale Versatz eines bestimmten Auges relativ zum Zentrum der Projektionsfläche viel größer, was ebenfalls die Größe der Detektionseinrichtung 3 beeinflusst. Die multiplen Augen-Positionszustände lassen sich analog wie bei der Brille bestimmen.

Bei einer 3D-Projektionsfläche sind vorzugsweise zunächst die Position der Augen zu bestimmen, bevor ihre Augenpositionszustände - also Winkel - aus dieser Startposition heraus "verfolgbar" sind. Ebenso kann beispielsweise eine Person kurz seinen Kopf wegdrehen und möchte danach die Szenen direkt wieder verfolgen können. Diese können mittels folgender Verfahren bzw. Vorrichtungen allein oder in Kombination bestimmt werden:

- Beobachtung mittels externer Kamera 17b, welche die Grob-Position der Augen - nicht notwendigerweise seine Rotationswinkel - vorgibt.

- Guiding Laserstrahl aus der Projektionseinrichtung 2, welcher einen großen Bereich lateral abtastet und bei Erkennung eines Signales im Feinmodus die genaue Augen-Position und Rotation bestimmen kann. Um den Lichtreiz so klein wie möglich zu gestalten, kann dabei die Pulsdauer sehr klein gewählt werden (z. B. im $\mu$s Bereich, beispielsweise zwischen 1-100 $\mu$s) und/oder nur im roten Spektralbereich gearbeitet werden. Bei laufenden Szenen wird der Guiding Laserstrahl dann von dem Bildinformationsstrahl abgelöst. Es wäre aber auch denkbar, den Guiding Strahl immer wieder einzublenden.

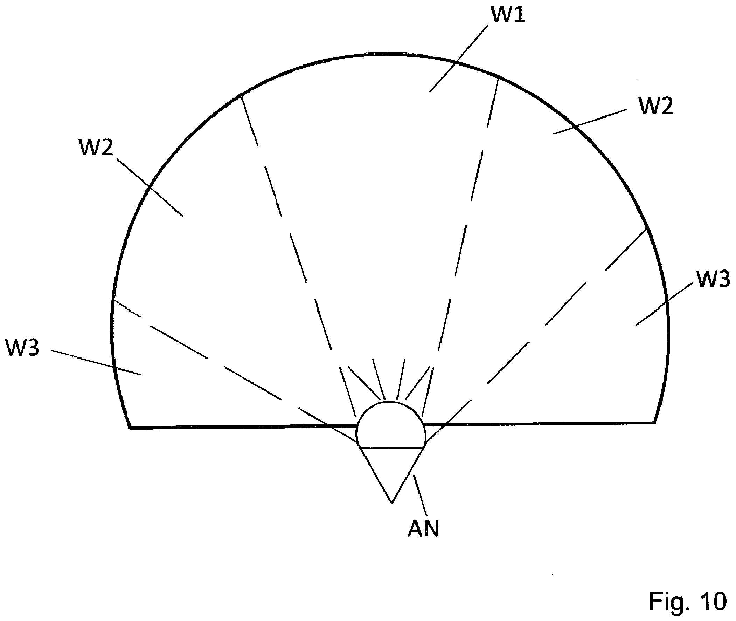

Fig. 10 zeigt verschiedene Wahrnehmbereiche eines Auges.

In Fig. 10 ist in schematischer Form das zweidimensionale Sehfeld eines Auge AN gezeigt. Weiterhin sind exemplarisch drei verschiedene Bereiche W1, W2, W3 - Wahrnehmbereiche - gezeigt, in denen das Auge Bildinformationen in unterschiedlicher Auflösung und/oder Kontrast wahrnimmt. Das Auge nimmt besonders im Bereich W1 Bildinformationen wahr - dieser ist besonders relevant für das Lesen. Im zweiten Bereich W2 nimmt das Auge räumliche Informationen bereits in geringerer Auflösung wahr. Hiervon abgestuft nimmt das Auge im Bereich W3 lediglich schnelle Bewegungen wahr und in niedriger Auflösung.

Dementsprechend muss die Projektions-/Detektionseinheit 2, 3 hier besonders wenig Informationen projizieren. Selbstverständlich ändern sich je nach Blickrichtung des Auges die verschiedenen Wahrnehmbereiche W1, W2, W3 bzw. diese verschwenken mit dem Bewegen bzw. einer Richtungsänderung des Auges entsprechend mit.

Zusammenfassend weist die vorliegende Erfindung unter anderem den Vorteil auf, dass eine vollständige dreidimensionale Darstellung ermöglicht wird bei gleichzeitiger einfacher Implementierbarkeit und hoher Flexibilität sowohl hinsichtlich der Implementierung als auch bei der entsprechenden Anwendung.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

| 1 | Optisches System |
|---|---|
| 2 | Projektionseinrichtung |
| 3 | Augendetektionseinrichtung |
| 4 | Abbildungseinrichtung |
| N | Nutzer |
| AN | Auge Nutzer |
| 5, 5a, 5c' | Hologramm-Set |
| 5b, 5d, | Hologramm-Set, winkelverstärkend |
| 5c | Hologramm-Set, reflektierend |
| 6 | Projektor |
| W1, W2, W3 | Wahrnehmbereich(e) |
| 8 | Optischer Wellenleiter / optical waveguide |
| 9 | Strahlteiler |
| 10 | Projektionsstrahlengang |
| 11 | Detektionsstrahlengang |
| 12 | Apertur Projektionseinrichtung |
| 13 | Amplituden-/Phasenmodulator |
| 14 | Linse |
| 15 | Reflexionselement |
| 17a, 17b | Kameras |
| 18 | Laserstrahlen |
| 19 | Verarbeitungseinrichtung |
| 21 | Virtuelle Lichtquelle/virtuelle(r) Punkt(e) |
| 22 | Beamlet |
| 22' | Gesamtstrahl Beamlets |
| 23 | Objektpunkt |
| 24a, 24b | Mikrolinsenanordnung |
| 25 | Laser-Lichtquelle |
| 26 | Segment |

### Patentansprüche

1. Optisches System (1) zur Erzeugung eines zwei- oder dreidimensionalen Bildes, umfassend

   a) eine holographische Projektionseinrichtung (2) zur optischen Übertragung von Bildinformation zu zumindest einem Nutzer (N),
   b) eine Augendetektionseinrichtung (3), und
   c) eine Abbildungseinrichtung (4) zur Abbildung der Bildinformationen der holographische Projektionseinrichtung (2) für die Wahrnehmung durch den zumindest einen Nutzer (N),

   wobei

   die Abbildungseinrichtung (4) zumindest ein optisches Hologramm-Set (5, 5a, 5b, 5c, 5d) umfasst, wobei

      - zumindest eines der optischen Hologramm-Sets (5, 5b, 5d) winkelverstärkend ausgebildet ist und das zumindest eine winkelverstärkend ausgebildete Hologramm-Set (5, 5b, 5d) zumindest zwei Hologramme umfasst und wobei die zumindest zwei Hologramme zur Bereitstellung der Winkelverstärkung zusammenwirken, und wobei

mittels der holographischen Projektionseinrichtung (2)

- zumindest eine virtuelle Punktlichtquelle (21) erzeugt wird oder
- eine Mehrzahl von virtuellen Punktlichtquellen (21) derart erzeugt werden, sodass diese zumindest eine optische Wellenfront bilden,

wobei die zumindest eine virtuelle Punktlichtquelle (21) oder die Mehrzahl von virtuellen Punktlichtquellen (21) jeweils durch Überlagerung zumindest zweier kohärenter Lichtwellen (7a, 7b) im Bereich des winkelverstärkend ausgebildeten optischen Hologramm-Sets (5, 5b, 5d) erzeugt wird und wobei

mittels des zumindest einen optischen Hologramm-Sets (5, 5a, 5b, 5c, 5d) die zumindest eine virtuelle Punktlichtquelle (21) oder die zumindest eine optische Wellenfront auf die jeweiligen Augen (AN) des zumindest einen Nutzers (N) abgebildet wird und wobei

die Augendetektionseinrichtung (3) konfiguriert ist, die jeweilige Bewegung der Augen (AN) des zumindest einen Nutzers (N) zu detektieren und die Augendetektionseinrichtung (3) mit der holographischen Projektionseinrichtung (2) dermaßen zusammenwirkt, sodass die Menge der Bildinformationen entsprechend der jeweiligen Augenrichtung und/oder Augenposition in verschiedenen Wahrnehmbereichen des jeweiligen Auges (AN) angepasst wird.

2. Optisches System gemäß Anspruche 1, **dadurch gekennzeichnet, dass** die Projektionseinrichtung (2) und die Augendetektionseinrichtung (3) als eine Projektions-/Detektionseinheit (2, 3) ausgebildet sind, insbesondere wobei die Projektions-/Detektionseinheit zumindest einen Strahlteiler (9) umfasst zur Aufteilung von Projektionsstrahlengang (10) und Detektionsstrahlengang (11) der Projektions-/Detektionseinheit (2, 3).

3. Optisches System gemäß einem der Ansprüche 1-2, wobei

eine Apertur (12) der Projektionseinrichtung (2) und/oder Detektionseinrichtung (3) kleiner als 10mm ist, und/oder wobei die Projektionseinrichtung (2) mit der Abbildungseinrichtung (4) mittels zumindest einem optischen Wellenleiter (8) verbunden ist.

4. Optisches System gemäß einem der Ansprüche 1-3, wobei die Projektionseinrichtung (2) zumindest einen Amplituden- und/oder Phasen-Modulator (13) oder einen oder mehrere Phasenmodulatoren umfasst, wobei bei einer Mehrzahl von Modulatoren diese gemeinsam in einem Modul angeordnet sind, insbesondere wobei der zumindest eine Phasenmodulator oder das Modul eine oder mehrere Linsen (14) umfasst, die an einem Ausgang des zumindest einen Phasenmodulators oder des Moduls angeordnet sind.

5. Optisches System gemäß einem der Ansprüche 1-4, wobei die Abbildungseinrichtung zumindest zwei optische Hologramm-Sets (5a, 5c; 5b, 5d) umfasst, wobei zumindest eines der optischen Hologramm-Sets (5b, 5d) winkelverstärkend ausgebildet ist und zumindest eines der optischen Hologramm-Sets (5a, 5c) winkelverstärkungsneutral ausgebildet ist, insbesondere wobei die Abbildungseinrichtung drei optische Hologramm-Sets (5a, 5b, 5c) umfasst, wobei zwei überwiegend transmittierend ausgebildete optische Hologramm-Sets (5a, 5b) angeordnet sind, wobei eines dieser zwei überwiegend transmittierend ausgebildeten optischen Hologramm-Sets (5b) winkelverstärkend ausgebildet ist und wobei ein drittes optisches Hologramm-Set (5c) überwiegend reflektierend ausgebildet ist, insbesondere wobei die drei optischen Hologramm-Sets (5a, 5b, 5c) in Blickrichtung eines Nutzers sequentiell hintereinander angeordnet, wobei das winkelverstärkend ausgebildete optische Hologramm-Set (5b) zwischen den beiden anderen optischen Hologramm-Sets (5a, 5c) angeordnet ist.

6. Optisches System gemäß einem der Ansprüche 1-5, wobei die mindestens zwei Hologramme in dem zumindest einen winkelverstärkenden optischen Hologramm-Set (5, 5b, 5d) zumindest teilweise ineinander angeordnet sind und/oder dass zumindest eines der optischen Hologramm-Sets (5, 5a, 5b, 5c, 5d) mehrere Hologramme umfasst, welche in einer lateralen Richtung senkrecht zur Blickrichtung eines Nutzers in der Ebene, in der eine gedachte Verbindungslinie zwischen den beiden Augen des Nutzers liegt sowie die Geradeaus-Blickrichtung eines Nutzers segmentweise nebeneinander angeordnet sind und/oder kontinuierlich in lateraler Richtung erstreckend ausgebildet sind, insbesondere wobei das zumindest eine winkelverstärkend ausgebildete optische Hologramm-Set (5b, 5d) in zumindest einer lateralen Richtung homogen ausgebildet ist.

7. Optisches System gemäß einem der Ansprüche 1-6, wobei das zumindest eine optische Hologramm-Set (5, 5a, 5b, 5c, 5d), vorzugsweise das zumindest teilweise reflektierend ausgebildete optische Hologramm-Set (5c), ein oder mehrere Hologramme umfasst, welche segmentweise als planare oder gekrümmte reflektive Phasenfläche (15) ausgebildet sind und/oder dass die Augendetektionseinrichtung (3) einen Hartmann-Shak-Sensor und/oder eine Interferometrieeinrichtung zur Detektion umfasst, wobei die Interferometrieeinrichtung zur Aussendung und Detektion zumindest eines Referenzstrahls (11) ausgebildet ist, insbesondere wobei mehrere Referenzstrahlen (11) durch gegenseitig kohärente Lichtquellen (25) erzeugbar sind.

8. Optisches System gemäß einem der Ansprüche 1-7, wobei die Projektionseinrichtung (2) ausgebildet ist, um Bildinformationen mittels zumindest zwei, vorzugsweise drei unterschiedlicher Wellenlängen zu übertragen, wobei pro unterschiedlicher Wellenlänge zumindest ein optisches Hologramm-Set (5, 5a, 5b, 5c, 5d) angeordnet ist, welche vorzugsweise zumindest teilweise ineinander angeordnet sind und/oder dass pro lateraler Richtung zumindest ein winkelverstärkend ausgebildetes optisches Hologramm (5b, 5d) angeordnet ist und/oder dass die Augendetektionseinrichtung (3) eine oder mehrere erste Kameras (17a) umfasst zur Ermittlung und/oder Überwachung der Position und/oder Richtung der Augen (AN) von einem oder mehreren Nutzern und/oder dass das optische System (1) als Brille ausgebildet ist, wobei die Abbildungseinrichtung (4) in zumindest einem Glas der Brille angeordnet ist.

9. Optisches System gemäß einem der Ansprüche 1-8, wobei das optische System (1) mindestens eine zweite Kamera (17b) umfasst zur Aufnahme eines Umgebungsbildes, insbesondere wobei eine Verarbeitungseinrichtung (19) zur Verarbeitung von Aufnahmen der mindestens einen zweiten Kamera (17b) angeordnet oder mit dem optischen System verbindbar ist, insbesondere wobei die Verarbeitungseinrichtung zur fotogrammetrischen Auswertung der aufgenommenen Umgebungsbilder ausgebildet ist.

10. Optisches System gemäß einem der Ansprüche 1-9, wobei das optische System einen Projektor (6) umfasst, der zur Erzeugung eines Belichtungsmusters ausgebildet ist, insbesondere wobei der Projektor (6) zur Bereitstellung eines Belichtungsmusters mit einer oder mehreren Wellenlängen im nahen Infrarot-Bereich ausgebildet ist.

11. Optisches System gemäß einem der Ansprüche 9-10, wobei die Verarbeitungseinrichtung (19) mit der Projektionseinrichtung (2) und mit der Abbildungseinrichtung (4) derart zusammenwirkt, sodass die ausgewerteten Umgebungsbilder entsprechend der Blickrichtung eines Nutzers (N) mit dem durch den transparenten Bereich der Abbildungseinrichtung (4) sichtbaren Umgebungsbereich zumindest teilweise überlagerbar sind.

12. Optisches System gemäß einem der Ansprüche 1-11, wobei das optische System einen Dimmer umfasst, sodass der Grad der Transparenz der Abbildungseinrichtung (4) anpassbar ist, insbesondere wobei mittels des Dimmers und/oder der Verarbeitungseinrichtung (19) zusammen mit der Projektionseinrichtung (2) ein sichtbarer Hintergrund einer realen Szene oder Umgebung farblich zumindest teilweise homogener ausgestaltbar ist.

13. Optisches System gemäß einem der Ansprüche 9-12, wobei die Bildinformationen in Form von Markierungsinformationen für einen Gegenstand oder dergleichen bereitstellbar sind, sodass mittels der Verarbeitungseinrichtung (19) ein mittels des optischen Systems betrachteter Gegenstand anhand der Aufnahmen erkennbar ist und die Markierungsinformationen für einen Nutzer (N) virtuell entsprechend auf den Gegenstand als Overlay abbildbar sind.

14. Optisches System gemäß einem der Ansprüche 1-13, wobei die Anzahl der kohärenten Lichtwellen zur Erzeugung eines virtuellen optischen Punktes (21) ungerade ist, insbesondere wobei die Anzahl der kohärenten Lichtwellen zur Erzeugung einer virtuellen optischen Punktlichtquelle (21) zumindest sieben beträgt.

15. Verfahren zur Erzeugung eines zwei- oder dreidimensionalen Bildes mittels eines optischen Systems, umfassend

    a) eine holographische Projektionseinrichtung (2) zur optischen Übertragung von Bildinformation zu zumindest einem Nutzer (N),
    b) eine Augendetektionseinrichtung (3), und
    c) eine Abbildungseinrichtung (4) zur Abbildung der Bildinformationen der holographischen Projektionseinrichtung (2) für die Wahrnehmung durch den zumindest einen Nutzer (N),

wobei

    die Abbildungseinrichtung (4)
    zumindest ein optisches Hologramm-Set (5, 5a, 5b, 5c, 5d) umfasst, wobei

        - zumindest eines der optischen Hologramm-Sets (5, 5b, 5d) winkelverstärkend ausgebildet wird und das zumindest eine winkelverstärkend ausgebildete Hologramm-Set (5, 5b, 5d) zumindest zwei Hologramme umfasst, wobei die zumindest zwei Hologramme zur Bereitstellung der Winkelverstärkung zusammenwirken, und wobei,

wobei mittels der holographischen Projektionseinrichtung (2)

- zumindest eine virtuelle Punktlichtquelle (21) oder
- eine Mehrzahl von virtuellen Punktlichtquellen (21) derart erzeugt werden, sodass diese zumindest eine Wellenfront bilden,

wobei die zumindest eine virtuelle Punktlichtquelle (21) oder die Mehrzahl von virtuellen Punktlichtquellen (21) jeweils durch Überlagerung zumindest zweier kohärenter Lichtwellen (7a, 7b) im Bereich des winkelverstärkend ausgebildeten optischen Hologramm-Sets (5, 5a, 5b, 5c, 5d) erzeugt werden,
wobei mittels des zumindest einen optischen Hologramm-Sets (5, 5a, 5b, 5c, 5d) die zumindest eine virtuelle Punktlichtquelle (21) oder die zumindest eine optische Wellenfront auf die jeweiligen Augen (AN) von zumindest einem Nutzer (N) abgebildet werden und
wobei die jeweilige Bewegung der Augen (AN) des zumindest einen Nutzers (N) mittels der Augendetektionseinrichtung (3) detektiert wird und die Menge der Bildinformationen entsprechend der jeweiligen Augenrichtung und/oder Augenposition in verschiedenen Wahrnehmbereichen des jeweiligen Auges (AN) angepasst wird.

**Claims**

1. An optical system (1) for forming a two- or three-dimensional image,
comprising

a) a holographic projection device (2) for optically transmitting image information to at least one user (N),
b) an eye detecting device (3), and
c) an imaging device (4) for imaging the image information of the holographic projection device (2) for the perception by the at least one user (N),

whereby,

the imaging device (4)
comprises at least one optical hologram set (5, 5a, 5b, 5c, 5d), wherein

- at least one of said optical hologram sets (5, 5b, 5d) is angularly amplified and said at least one angularly amplified hologram set (5, 5b, 5d) comprises at least two holograms and said at least two holograms interact to provide said angular amplification, and wherein

by means of the holographic projection device (2)

- at least one virtual point light source (21) is generated or
- a plurality of virtual point light sources (21) are generated such that they form at least one optical wavefront,

wherein the at least one virtual point light source (21) or the plurality of virtual point light sources (21) are each be generated by superimposing at least two coherent light waves (7a, 7b) in the region of the optical hologram set (5, 5b, 5d) formed to amplify the angle, and wherein
by means of the at least one optical hologram set (5, 5a, 5b, 5c, 5d) the at least one virtual point light source (21) or the at least one optical wavefront are imaged onto the respective eyes (AN) of the at least one user (N) and wherein
the eye detection device (3) is configured to detect the respective movement of the eyes (AN) of the at least one user (N) and the eye detection device (3) cooperates with the holographic projection device (2) in such a way that the amount of image information is adapted according to the respective eye direction and/or eye position in different perception regions of the respective eye (AN).

2. The optical system according to claim 1, **characterized in that** the projection device (2) and the eye detection device (3) are formed as a projection/detection unit (2, 3), preferably wherein the projection/detection unit comprises at least one beam splitter (9) for splitting up projection beam path (10) and detection beam path (11) of the projection/detection unit (2, 3).

3. The optical system according to one of claims 1-2, wherein an aperture (12) of the projection device (2) and/or detection device (3) is smaller than 10 mm and/or wherein the projection device (2) is connected to the imaging device (4) by means of at least one optical waveguide (8).

4. The optical system according to one of claims 1-3, wherein the projection device (2) comprises at least one amplitude and/or phase modulator (13) or one or more phase modulators, wherein a plurality of modulators are arranged together in a module, preferably wherein the at least one phase modulator or module comprises one or more lenses (14) arranged at an output of the at least one phase modulator or module.

5. The optical system according to one of claims 1-4, wherein the imaging device comprises at least two optical hologram sets (5a, 5c; 5b, 5d), wherein at least one of the optical hologram sets (5b, 5d) being angle-enhancing and at least one of the optical hologram sets (5a, 5c) being angle-enhancing-neutral, preferably wherein the imaging device comprises three optical hologram sets (5a, 5b, 5c), wherein two predominantly transmitting optical hologram sets (5a, 5b) are arranged, wherein one of these two predominantly transmitting optical hologram sets (5b) is angle-enhancing and wherein a third optical hologram set (5c) is predominantly reflecting, preferably wherein the three optical hologram sets (5a, 5b, 5c) are arranged sequentially one behind the other in the viewing direction of a user, wherein the angle-enhancing optical hologram set (5b) is arranged between the two other optical hologram sets (5a, 5c).

6. The optical system according to any of claims 1-5, wherein at least two holograms in at least one angle-enhancing optical hologram set (5, 5b, 5d) are at least partially interlocked and/or wherein at least one of the optical hologram sets (5, 5a, 5b, 5c, 5d) comprises a plurality of holograms, which are arranged segmentally side by side and/or continuously extending in a lateral direction perpendicular to the viewing direction of a user in the plane in which an imaginary line of communication lies between the two eyes of the user and the straight-line viewing direction of a user, preferably wherein the at least one optical hologram set (5b, 5d) formed to amplify the angle is homogeneous in at least one lateral direction.

7. The optical system according to any of claims 1-6, wherein the at least one optical hologram set (5, 5a, 5b, 5c, 5d), preferably the at least partially reflective optical hologram set (5c), comprises one or more holograms formed segmentally as a planar or curved reflective phase surface (15) and/or wherein the eye detection device (3) comprises a Shack-Hartmann sensor and/or an interferometry device for detection, wherein the interferometry device is designed to emit and detect at least one reference beam (11), preferably wherein a plurality of reference beams (11) can be generated by mutually coherent light sources (25).

8. The optical system according to one of claims 1-7, wherein the projection device (2) is designed to transmit image information by means of at least two, preferably three different wavelengths, wherein at least one optical hologram set (5, 5a, 5b, 5c, 5d) being arranged per different wavelength, which is preferably at least partially arranged one inside the other and/or wherein at least one optical hologram (5b, 5d) having an angular amplification is arranged per lateral direction and/or wherein the eye detection device (3) comprises one or more first cameras (17a) for detecting and/or monitoring the position and/or direction of the eyes (AN) of one or more users and/or wherein the optical system (1) is formed as spectacles, wherein the imaging device (4) being arranged in at least one lens of the spectacles.

9. The optical system according to one of the claims 1-8, wherein the optical system (1) comprises at least one-second camera (17b) for taking an environmental image, preferably wherein a processing device (19) for processing images of the at least one second camera (17b) is arranged or can be connected to the optical system, in particular wherein the processing device is designed for photogrammetric evaluation of the recorded environmental images.

10. The optical system according to one of the claims 1-9, wherein the optical system comprises a projector (6) adapted to generate an exposure pattern, preferably wherein the projector (6) is adapted to provide an exposure pattern having one or more wavelengths in the near-infrared range.

11. The optical system according to one of the claims 9-10, wherein the processing device (19) cooperates with the projection device (2) and the imaging device (4) such that the evaluated environmental images are at least partially superimposable according to the viewing direction of a user (N) with the environmental region visible through the transparent region of the imaging device (4).

12. The optical system according to one of claims 1-11, wherein the optical system comprises a dimmer so that the degree of transparency of the imaging device (4) is adjustable, preferably wherein by means of the dimmer and/or the processing device (19) together with the projection device (2) a visible background of a real scene or environment is at least partially more homogeneously colourable.

13. The optical system according to one of claims 9-12, wherein the image information can be provided in the form of marking information for an object or the like, so that by means of the processing device (19) an object viewed by means of the optical system can be identified by means of the photographs and the marking information can be virtually depicted for a user (N) correspondingly on the object as an overlay.

14. The optical system according to one of the claims 1-13, wherein the number of coherent light waves for generating a virtual optical point (21) is odd, preferably wherein the number of coherent light waves for generating a virtual optical point light source (21) is at least seven.

15. A method for forming a two- or three-dimensional image by means of an optical system comprising

    a) a holographic projection device (2) for optically transmitting image information to at least one user (N),
    b) an eye detection device (3), and
    c) an imaging device (4) for imaging the image information of the holographic projection device (2) for the perception by at least one user (N),

wherein

    the imaging device (4)
    comprises at least one optical hologram set (5, 5a, 5b, 5c, 5d), wherein

        - at least one of the optical hologram sets (5, 5b, 5d) is angularly amplified and the at least one angularly amplified hologram set (5, 5b, 5d) comprises at least two holograms, wherein the at least two holograms cooperating to provide the angular amplification, and

    wherein by means of the projection device (2)

        - at least one virtual point light source (21) or
        - a plurality of virtual point light sources (21) are generated such that they form at least one wavefront,

    wherein the at least one virtual point light source (21) or the plurality of virtual point light sources (21) are each generated by superimposing at least two coherent light waves (7a, 7b) in the region of the optical hologram set (5, 5a, 5b, 5c, 5d) formed to amplify the angle, wherein by means of at least one optical hologram set (5, 5a, 5b, 5c, 5d) the at least one virtual point light source (21) or the at least one optical wavefront are imaged onto the respective eyes (AN) of at least one user (N) and wherein the respective movement of the eyes (AN) of at least one user (N) is detected by the eye detection device (3) and the amount of image information is adjusted according to the respective eye direction and/or eye position in different perception regions of the respective eye (AN).

## Revendications

1. Système optique (1) pour la production d'une image bidimensionnelle ou tridimensionnelle, comprenant

    a) un dispositif de projection holographique (2) pour la transmission option d'informations d'image à au moins un utilisateur (N),
    b) un dispositif de détection des yeux (3) et
    c) un dispositif de représentation (4) pour la représentation des informations d'image du dispositif de projection holographique (2) pour la perception par l'au moins un utilisateur (N),

dans lequel

    le dispositif de représentation (4)
    comprend au moins un ensemble d'hologramme optique (5, 5a, 5b, 5b, 5c, 5d), dans lequel

        — au moins un des ensembles d'hologramme optique (5, 5b, 5d) est conçu de façon à renforcer les angles et l'au moins un ensemble d'hologramme optique (5, 5b, 5d) conçu de façon à renforcer les angles comprend au moins deux hologrammes et dans lequel les au moins deux hologrammes interagissent pour la mise à disposition du renforcement des angles et dans lequel au moyen du dispositif de projection holographique (2)
        — au moins une source de lumière ponctuelle virtuelle (21) est produite ou
        — une pluralité de sources de lumière ponctuelles virtuelles (21) est produite de façon à ce que celles-ci constituent au moins un front d'onde optique,

    dans lequel l'au moins une source de lumière ponctuelle virtuelle (21) ou la pluralité de sources de lumière ponctuelles (21) est produite respectivement par la superposition d'au moins deux ondes lumineuses cohérentes (7a, 7b) au niveau de l'ensemble d'hologramme optique (5, 5b, 5d) conçu de façon à renforcer les angles et dans lequel
    au moyen de l'au moins un ensemble d'hologramme optique (5, 5a, 5b, 5b, 5c, 5d), l'au moins une source de lumière ponctuelle virtuelle (21) ou l'au moins un front d'onde optique est représenté sur les yeux (AN) respectifs de l'au moins un utilisateur (N) et
    dans lequel
    le dispositif de détection des yeux (3) est conçu pour détecter le mouvement respectif des yeux (AN) de l'au moins un utilisateur (N) et le dispositif de détection des yeux (3) interagit avec le dispositif de projection holographique (2) de façon à ce que la quantité d'informations d'image est adaptée en fonction de la direction et/ou la position respective des yeux dans différentes zones de perception de l'œil (AN) respectif.

2. Système optique selon la revendication 1, **caractérisé en ce que** le dispositif de projection (2) et le dispositif de détection des yeux (3) sont conçus comme une unité de projection/détection (2, 3), plus particulièrement dans lequel l'unité de projection/détection comprend au moins un diviseur de faisceau (9) pour la division du trajet de faisceau de projection (10) et du trajet de faisceau de détection (11) de l'unité de projection/détection (2, 3).

3. Système optique selon l'une des revendications 1 à 2, dans lequel une ouverture (12) du dispositif de projection (2) et/ou du dispositif de détection (3) est plus petite que 10 mm et/ou dans lequel le dispositif de projection (2) est relié avec le dispositif de représentation (4) au moyen d'au moins un guide d'onde optique (8).

4. Système optique selon l'une des revendications 1 à 3, dans lequel le dispositif de projection (2) comprend au moins un modulateur d'amplitude et/ou de phase (13) ou un ou plusieurs modulateurs de phase, dans lequel, dans le cas d'une pluralité de modulateurs, ceux-ci sont disposés ensemble dans un module, plus particulièrement dans lequel l'au moins un modulateur de phase ou le module comprend une ou plusieurs lentilles (14), qui sont montées à une sortie de l'au moins un modulateur de phase ou du module.

5. Système optique selon l'une des revendications 1 à 4, dans lequel le dispositif de représentation comprend au moins deux ensembles d'hologramme optiques (5a, 5c ; 5b, 5d), dans lequel au moins un des ensembles d'hologramme optiques (5b, 5d) est conçu de façon à renforcer les angles et au moins un des ensembles d'hologramme optiques (5a, 5c) est conçu de manière neutre en ce qui concerne le renforcement des angles, plus particulièrement dans lequel le dispositif de représentation comprend trois ensembles d'hologramme optiques (5a, 5b, 5c), dans lequel deux ensembles d'hologramme optiques (5a, 5b), conçus de manière principalement transmissive sont disposés, dans lequel un de ces deux ensembles d'hologramme optiques (5b) conçus de manière principalement transmissive est conçu de façon à renforcer les angles et dans lequel un troisième ensemble d'hologramme optique (5c) est conçu de manière principalement réfléchissante, plus particulièrement dans lequel les trois ensembles d'hologramme optiques (5a, 5b, 5c) sont disposés les uns derrière les autres de manière séquentielle dans la direction du regard d'un utilisateur, dans lequel l'ensemble d'hologramme optique (5b) conçu de façon à renforcer les angles est disposé entre les deux autres ensembles d'hologramme optiques (5a, 5c).

6. Système optique selon l'une des revendications 1 à 5, dans lequel les au moins deux hologrammes dans l'au moins un ensemble d'hologramme optique (5, 5b, 5d) conçu de façon à renforcer les angles sont disposés au moins partiellement l'un dans l'autre et/ou en ce qu'au moins un des ensemble d'hologramme optiques (5, 5a, 5b, 5c, 5d) comprend plusieurs hologrammes qui sont juxtaposés, dans une direction latérale perpendiculaire à la direction du regard d'un utilisateur dans le plan dans lequel une ligne de liaison imaginaire se trouve entre les deux yeux de l'utilisateur ainsi que la direction du regard tout droit d'un utilisateur, par segments et/ou sont disposés de manière continue en s'étendant dans la direction latérale, plus particulièrement dans lequel l'au moins un ensemble d'hologramme optique (5b, 5d) conçu de façon à renforcer les angles est conçu de manière homogène dans au moins une direction latérale.

7. Système optique selon l'une des revendications 1 à 6, dans lequel l'au moins un ensemble d'hologramme optique (5, 5a, 5b, 5c, 5d), de préférence l'ensemble d'hologramme optique (5c) conçu de manière au moins partiellement réfléchissante, comprend un ou plus hologrammes, qui sont conçus par segments comme une surface de phase réfléchissante plane ou courbe (15) et/ou en ce que le dispositif de détection des yeux (3) comprend un capteur Hartmann-Shak et/ou un dispositif d'interférométrie pour la détection, dans lequel le dispositif d'interférométrie est conçu pour émettre et détecter au moins un faisceau de référence (11), plus particulièrement dans lequel plusieurs faisceaux de référence (11) peuvent être produits par des sources de lumière cohérentes entre elles (25).

8. Système optique selon l'une des revendications 1 à 7, dans lequel le dispositif de projection (2) est conçu pour transmettre des informations d'images au moyen d'au moins deux, de préférence trois, longueurs d'ondes différentes, dans lequel, pour chaque longueur d'onde, au moins un ensemble d'hologramme optique (5, 5a, 5b, 5c, 5d) est disposé, qui sont disposés de préférence au moins partiellement les uns dans les autres et/ou en ce que, pour chaque direction latérale, au moins un hologramme optique (5b, 5d) conçu de façon à renforcer les angles, est disposé et/ou en ce que le dispositif de détection des yeux (3) comprend une ou plusieurs caméras (17a) pour la détermination et/ou la surveillance de la position et/ou de la direction des yeux (AN) d'un ou plusieurs utilisateurs et/ou en ce que le système optique (1) est conçu comme une paire de lunettes, dans lequel le dispositif de représentation (4) est disposé dans au moins un verre de la paire de lunettes.

9. Système optique selon l'une des revendications 1 à 8, dans lequel le système optique (1) comprend au moins une deuxième caméra (17b) pour l'enregistrement d'une image d'environnement, plus particulièrement dans lequel un dispositif de traitement (19) est disposé pour le traitement des enregistrements de l'au moins une deuxième caméra (17b) ou peut être relié avec le système optique, plus particulièrement dans lequel le dispositif de traitement est conçu pour l'analyse photogrammétrique des images d'environnement enregistrées.

10. Système optique selon l'une des revendications 1 à 9, dans lequel le système optique comprend un projecteur (6) qui est conçu pour la production d'un motif d'exposition, plus particulièrement dans lequel le projecteur (6) est conçu pour la mise à disposition d'un motif d'exposition avec une ou plusieurs longueurs d'onde dans le domaine du proche infrarouge.

11. Système optique selon l'une des revendications 9 à 10, dans lequel le dispositif de traitement (19) interagit avec le dispositif de projection (2) et avec le dispositif de représentation (4) de façon à ce que les images d'environnement analysées puissent être superposées au moins partiellement, en fonction de la direction du regard d'un utilisateur (N), avec la zone de l'environnement visible à travers la zone transparente du dispositif de représentation (4).

12. Système optique selon l'une des revendications 1 à 11, dans lequel le système optique comprend un gradateur, de façon à ce que le degré de transparence du dispositif de représentation (4) puisse être ajusté, plus particulièrement dans lequel, au moyen du gradateur et/ou du dispositif de traitement (19), conjointement avec le dispositif de projection (2), un arrière-plan visible d'une scène ou d'un environnement réel peut être conçu de manière au moins partiellement homogène du point de vue de la couleur.

13. Système optique selon l'une des revendications 9 à 12, dans lequel les informations d'image peuvent être mises à disposition sous la forme d'informations de marquage pour un objet ou autre, de façon à ce que, au moyen du dispositif de traitement (19), un objet observé au moyen du système optique puisse être reconnu à l'aide des enregistrements et les informations de marquage peuvent être représentées pour un utilisateur (N) virtuellement de manière correspondante sur l'objet en surimpression.

14. Système optique selon l'une des revendications 1 à 13, dans lequel le nombre de sources de lumière cohérentes pour la production d'un point optique virtuel (21) est impair, plus particulièrement dans lequel le nombre de sources de lumière cohérentes pour la production d'une source de lumière ponctuelle optique virtuelle (21) est d'au moins sept.

15. Procédé de production d'une image bidimensionnelle ou tridimensionnelle au moyen d'un système optique, comprenant

    a) un dispositif de projection holographique (2) pour la transmission option d'informations d'image à au moins un utilisateur (N),
    b) un dispositif de détection des yeux (3) et
    c) un dispositif de représentation (4) pour la représentation des informations d'image du dispositif de projection holographique (2) pour la perception par l'au moins un utilisateur (N),

dans lequel

    le dispositif de représentation (4)
    comprend au moins un ensemble d'hologramme optique (5, 5a, 5b, 5b, 5c, 5d), dans lequel

        — au moins un des ensembles d'hologramme optique (5, 5b, 5d) est conçu de façon à renforcer les angles et l'au moins un ensemble d'hologramme optique (5, 5b, 5d) conçu de façon à renforcer les angles comprend au moins deux hologrammes et dans lequel les au moins deux hologrammes interagissent pour la mise à disposition du renforcement des angles et dans lequel au moyen du dispositif de projection holographique (2)
        — au moins une source de lumière ponctuelle virtuelle (21) est produite ou
        — une pluralité de sources de lumière ponctuelles virtuelles (21) est produite de façon à ce que celles-ci constituent au moins un front d'onde optique,

    dans lequel l'au moins une source de lumière ponctuelle virtuelle (21) ou la pluralité de sources de lumière ponctuelles (21) est produite respectivement par la superposition d'au moins deux ondes lumineuses cohérentes (7a, 7b) au niveau de l'ensemble d'hologramme optique (5, 5a, 5b, 5c, 5d) conçu de façon à renforcer les angles et dans lequel, au moyen de l'au moins un ensemble d'hologramme optique (5, 5a, 5b, 5b, 5c, 5d), l'au moins une source de lumière ponctuelle virtuelle (21) ou l'au moins un front d'onde optique est représenté sur les yeux (AN) respectifs d'au moins un utilisateur (N) et dans lequel le mouvement respectif des yeux (AN) de l'au moins un utilisateur (N) est détecté au moyen du dispositif de détection des yeux (3) et la quantité d'informations d'image est adaptée en fonction de la direction et/ou la position respective des yeux dans différentes zones de perception de l'œil (AN) respectif.

Fig. 1

Fig. 2

Fig. 3

Fig. 4

Fig. 5

mehrfach
reflektierter
Strahl

Cornea/Linse

AN

2,3    Fig. 6

Fig. 7

EP 3 371 632 B1

Fig. 8

EP 3 371 632 B1

AN1

AN3

2, 3

PD-Einheit

AN2

17a

17b

Volumen-Hologramm

4

5

Fig. 9

EP 3 371 632 B1

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69820363 T2
- US 7350922 B2
- US 5917459 A
- WO 2010057219 A1
- US 20100060551 A
- WO 2014115095 A